Europäisches Patentamt

European Patent Office

Office européen des brevets

(19)

(11) Numéro de publication : **0 485 263 B1**

(12) # FASCICULE DE BREVET EUROPEEN

(45) Date de publication du fascicule du brevet :
**19.10.94 Bulletin 94/42**

(51) Int. Cl.$^5$ : **G05D 1/06,** B64C 13/04,
G05D 1/00

(21) Numéro de dépôt : **91402936.8**

(22) Date de dépôt : **04.11.91**

(54) **Système pour la commande intégrée en profondeur et en poussée d'un aéronef.**

(30) Priorité : **06.11.90 FR 9013718**

(43) Date de publication de la demande :
**13.05.92 Bulletin 92/20**

(45) Mention de la délivrance du brevet :
**19.10.94 Bulletin 94/42**

(84) Etats contractants désignés :
**DE GB IT NL**

(56) Documents cités :
EP-A- 0 296 951
FR-A- 2 245 999
GB-A- 2 073 114
US-A- 3 512 737
US-A- 4 266 743

(56) Documents cités :
**JOURNAL OF GUIDANCE AND CONTROL AND
DYNAMICS, vol. 9, no. 6, novembre 1986,pages 614-619, New York, US; R.A. HESS et al.:
"Cross coupling in pilot-vehicle systems"
ELECTRONICS & WIRELESS WORLD,vol.
96,no. 1652, juin 1990, pages 473-478, Sutton,
GB; AVIONICS: "Safety in numbers ?"**

(73) Titulaire : **AEROSPATIALE SOCIETE
NATIONALE INDUSTRIELLE Société
Anonyme dite:
37, Boulevard de Montmorency
F-75016 Paris (FR)**

(72) Inventeur : **Farineau, Jacques
45 rue Saint Roch
F-31400 Toulouse (FR)**
Inventeur : **Larramendy, Panxika
86, rue de la Concorde
F-31000 Toulouse (FR)**

(74) Mandataire : **Bonnetat, Christian
CABINET BONNETAT
23, Rue de St.Pétersbourg
F-75008 Paris (FR)**

## Description

Système pour la commande intégrée en profondeur et en poussée d'un aéronef.

La présente invention a pour objet un système pour la commande intégrée en profondeur et en poussée d'un aéronef.

Dans la demande de brevet européen EP-A-0 465 352 revendiquant la date de priorité de la demande de brevet français n° 90.08479, déposée le 4 Juillet 1990 au nom de la Demanderesse, on a décrit un système de commande en profondeur et en poussée pour un aéronef comportant :

- des premières surfaces aérodynamiques de profondeur actionnées à partir d'un premier organe d'actionnement associé à un premier transducteur délivrant un premier signal électrique représentatif de l'assiette commandée ;
- au moins un moteur commandé à partir d'un second organe d'actionnement associé à un second transducteur délivrant un second signal électrique représentatif d'une vitesse commandée pour ledit aéronef ;
- une pluralité de secondes surfaces aérodynamiques dont certaines peuvent prendre, en fonction de chaque phase de vol de l'aéronef, des positions déterminées différentes définissant des configurations aérodynamiques particulières, le choix de l'une ou l'autre desdites configurations aérodynamiques étant obtenu grâce à l'actionnement d'un troisième organe d'actionnement associé à un troisième transducteur délivrant un troisième signal électrique représentatif de la configuration choisie ;
- des moyens susceptibles de délivrer un quatrième signal électrique représentatif de la masse dudit aéronef ;
- des moyens susceptibles de délivrer un cinquième signal électrique représentatif de la distance, le long de l'axe longitudinal dudit aéronef, séparant le centre de gravité dudit aéronef d'une origine ; et
- des moyens susceptibles de délivrer des sixième, septième, huitième, neuvième et dixième signaux électriques, respectivement représentatifs de l'altitude de vol, de l'incidence aérodynamique, de la vitesse de tangage, de l'assiette longitudinale et de la vitesse instantanées dudit aéronef, ledit système de commande étant remarquable en ce qu'il comporte :
- un premier dispositif de calcul recevant lesdits premier à sixième signaux électriques, ainsi que ledit dixième signal électrique et élaborant une première et une seconde combinaison linéaire desdits premier et second signaux électriques, les coefficients attribués respectivement auxdits premier et second signaux électriques dans ladite première et ladite seconde combinaison linéaire dépendant desdits troisième à sixième et dixième signaux électriques ;
- un second dispositif de calcul recevant lesdits troisième à dixième signaux électriques et élaborant une troisième et une quatrième combinaison linéaire desdits septième à dixième signaux électriques, les coefficients attribués respectivement auxdits septième à dixième signaux électriques dans ladite troisième et ladite quatrième combinaison linéaire dépendant desdits troisième à sixième et dixième signaux électriques ;
- des premiers moyens additionneurs recevant lesdites première et troisième combinaisons linéaires et les additionnant pour former un premier ordre électrique de commande en profondeur adressé auxdites premières surfaces aérodynamiques ; et
- des seconds moyens additionneurs recevant lesdites seconde et quatrième combinaisons linéaires et les additionnant pour former un second ordre électrique de commande en poussée adressé audit moteur.

Ainsi, on obtient un système de commande intégrée en profondeur et en poussée dans lequel chacun des ordres de commande en profondeur et en poussée est une combinaison linéaire comportant des paramètres statiques (l'assiette commandée et la vitesse commandée) et des paramètres dynamiques (l'incidence, la vitesse de tangage, l'assiette longitudinale et la vitesse instantanées). Un tel système permet donc de diminuer la charge de travail du pilote, tout en apportant une plus grande sécurité et en améliorant le confort des passagers de l'aéronef.

La présente invention a pour objet de perfectionner le système de commande intégrée rappelé ci-dessus, notamment pour permettre le verrouillage de l'assiette de l'aéronef en turbulences lorsque ledit premier organe d'actionnement est en position neutre.

A cette fin, selon l'invention, le système de commande intégrée du type ci-dessus est remarquable en ce que ledit premier transducteur comporte :
- des moyens pour engendrer un onzième signal électrique représentatif de la position dudit premier organe d'actionnement par rapport à une position neutre ;
- une mémoire recevant ledit onzième signal électrique et lui faisant correspondre un douzième signal électrique représentatif d'une vitesse de tangage commandée ; et
- des moyens d'intégration recevant ledit douzième signal électrique et l'intégrant pour engendrer ledit premier signal électrique représentatif de l'assiette commandée.

Ainsi, le pilotage au manche (le premier organe d'actionnement) est un pilotage en vitesse de tangage commandée à vitesse aérodynamique constante. Ceci signifie que lorsque le pilote actionne le manche, il choisit une vitesse de variation d'assiette : pour obtenir une variation totale d'assiette de 10°, le pilote peut par exemple maintenir le manche dans une position correspondant à une vitesse de variation d'assiette de 5 degrés par seconde pendant 2 secondes, ou bien maintenir le manche dans une position correspondant à une vitesse de variation d'assiette de 2 degrés par seconde pendant 5 secondes. De toutes façons, lorsque l'assiette désirée aura été obtenue et que le pilote aura ramené le manche en position neutre, l'aéronef sera maintenu à cette assiette, jusqu'à ce que le pilote agisse de nouveau sur le manche. Ainsi, lorsque le manche est en position neutre, l'assiette de l'aéronef est verrouillée, même si ledit aéronef rencontre des turbulences.

Outre cet avantage de verrouillage d'assiette, le pilotage en vitesse de tangage commandée est également intéressant car l'assiette est un paramètre que le pilote visualise facilement, au contraire de la pente dont il lui est difficile de prendre parfaitement conscience. Le pilote commandant une vitesse de tangage ne connaît pas l'assiette commandée ; en fait, il se réfère à l'assiette de l'aéronef pour commander une vitesse de tangage. Par ailleurs, on remarquera que l'erreur statique entre l'assiette réelle de l'aéronef et l'assiette commandée est annulée par le pilote (il agit sur le manche jusqu'à atteindre l'assiette désirée), de sorte qu'il n'est pas nécessaire de prévoir une liaison de retour afin d'annuler cette erreur statique.

Avantageusement, ladite mémoire comporte autant de premières tables de correspondance entre les onzième et douzième signaux électriques que de configurations différentes que peuvent prendre lesdites secondes surfaces aérodynamiques et ladite mémoire reçoit, dudit troisième transducteur, ledit troisième signal électrique représentatif de ladite configuration choisie, de sorte que, à chaque instant, ledit douzième signal électrique correspond à la configuration actuelle.

De préférence, lesdits moyens d'intégration comportent un intégrateur, un amplificateur et des troisièmes moyens additionneurs, les entrées dudit intégrateur et dudit amplificateur étant reliées à une borne commune recevant ledit douzième signal électrique et ledit intégrateur et ledit amplificateur délivrant leurs signaux de sortie auxdits troisièmes moyens additionneurs, qui délivrent ledit premier signal électrique. Ainsi, ledit amplificateur engendre un signal d'avance de phase permettant aux surfaces aérodynamiques de réagir immédiatement à un ordre provenant dudit premier organe d'actionnement.

Par ailleurs, si l'on effectue l'étude mathématique du système de commande de l'invention, on s'aperçoit que sa fonction de transfert entre l'assiette réelle de l'aéronef et l'assiette commandée (ledit premier signal) en sortie dudit premier transducteur est du type $1/1 + k1.p+k2.p^2$ , expression dans laquelle p est la variable de la transformation de Laplace et k1 et k2 sont des constantes.

Aussi, dans un mode avantageux de réalisation desdits moyens d'intégration on prend en compte cette fonction de transfert pour que la chaîne entre l'assiette réelle de l'aéronef et la vitesse de tangage commandée ait un comportement simple. A cet effet, on choisit alors le gain dudit amplificateur égal à k1, et on prévoit un premier filtre de fonction $1/1 + \tau p$ recevant le signal de sortie desdits troisièmes moyens additionneurs, un second filtre de fonction $k2.p/1+\tau p$ recevant ledit douzième signal et des quatrièmes moyens additionneurs qui reçoivent les signaux de sortie desdits premier et second filtres et qui délivrent ledit premier signal électrique.

Ainsi, comme on le montrera par la suite, la fonction de transfert globale entre l'assiette réelle de l'aéronef et la vitesse de tangage commandée est équivalente à celle qui serait donnée par un filtre du premier ordre associé à un intégrateur.

On remarquera de plus que, dans ce mode de réalisation, le temps de réponse des moyens d'intégration dépend de la valeur de la constante de temps $\tau$ desdits premier et second filtres. Par suite, la commande de ladite constante de temps permet le contrôle du temps de réponse desdits moyens d'intégration.

Par ailleurs, on voit que ledit second filtre constitue une transmission directe entre ledit premier organe d'actionnement (le manche) et ledit premier dispositif de calcul. Une telle particularité permet d'associer aisément des moyens de protection, par exemple en assiette, en incidence ou en facteur de charge, au système conforme à la présente invention.

En effet, notamment afin d'assurer le confort des passagers, il est préférable d'éviter que l'assiette réellement prise par l'aéronef puisse dépasser une valeur maximale, par exemple égale à 35°. A cette fin, selon une autre particularité de la présente invention, on prévoit :

- un premier commutateur, disposé entre lesdits moyens engendrant ledit onzième signal électrique et ladite mémoire engendrant ledit douzième signal électrique, ledit premier commutateur reliant lesdits moyens et ladite mémoire pour la première de ses positions ;
- une deuxième table, disposée en parallèle sur ladite mémoire et susceptible de faire correspondre, audit onzième signal électrique, un treizième signal électrique représentatif d'une assiette commandée, ledit premier commutateur reliant lesdits moyens engendrant ledit onzième signal électrique à ladite deuxième table pour la seconde de ses positions ;
- des premiers moyens de commande dudit premier commutateur;

- des premiers moyens de comparaison comparant ledit neuvième signal représentatif de l'assiette longitudinale à une valeur de consigne de protection d'assiette, lesdits premiers moyens de comparaison contrôlant lesdits premiers moyens de commande, de façon que ledit premier commutateur prenne respectivement sa première ou sa seconde position suivant qu'une première différence entre ledit neuvième signal et ladite valeur de consigne de protection d'assiette est positive, d'une part, ou négative ou nulle, d'autre part ;
- une troisième table susceptible de faire correspondre audit neuvième signal représentatif de l'assiette longitudinale un quatorzième signal représentatif d'une correction d'assiette ;
- des moyens pour former une seconde différence entre lesdits treizième et quatorzième signaux ; et
- des moyens pour transmettre, auxdits moyens d'intégration, ledit douzième signal électrique lorsque ledit premier commutateur est dans sa première position, ou ladite seconde différence lorsque ledit premier commutateur est dans sa seconde position.

Ainsi, lorsque l'assiette réelle de l'aéronef est inférieure à ladite valeur de consigne de protection d'assiette, l'aéronef est piloté en vitesse de tangage, comme cela a été expliqué ci-dessus. En revanche, dès que ladite assiette réelle est égale ou supérieure à cette valeur de consigne de protection d'assiette, l'aéronef est piloté en assiette, avec limitation de celle-ci. Dans ce cas, la commande d'assiette transite vers les gouvernes de profondeur à travers ledit second filtre desdits moyens d'intégration.

Afin que la protection en assiette soit déclenchée avant que l'assiette réelle atteigne une valeur maximale à ne pas dépasser, il est avantageux que le système comporte des moyens pour ajouter audit neuvième signal représentatif de l'assiette longitudinale, avant d'être appliqué auxdits premiers moyens de comparaison et à ladite troisième table, un terme d'avance de phase proportionnel audit huitième signal électrique représentatif de la vitesse de tangage. On s'est aperçu qu'il était avantageux que ledit terme d'avance de phase soit égal au produit dudit huitième signal électrique par la constante de temps desdits premier et second filtres.

De plus, afin d'assurer la continuité des ordres appliqués auxdites gouvernes de profondeur lors du passage du pilotage en vitesse de tangage au pilotage en assiette avec limitation et vice-versa, on prévoit des moyens pour corriger ledit premier signal électrique à chaque basculement dudit premier commutateur.

De ce qui précède, on constate que, dans le système conforme à l'invention, la protection en assiette est obtenue sans aucune modification de base dudit système : seul ledit premier transducteur est modifié. Une telle protection est donc simplement ajoutée au système de base.

Sur le même principe, la présente invention prévoit la possibilité de protection en incidence ou en facteur de charge vertical.

Ainsi, un système conforme à l'invention, protégé en incidence, comporte :
- un deuxième commutateur, disposé entre lesdits moyens engendrant ledit onzième signal électrique et ladite mémoire engendrant ledit douzième signal électrique, ledit deuxième commutateur reliant lesdits moyens et ladite mémoire pour la première de ses positions ;
- une quatrième table, disposée en parallèle sur ladite mémoire et susceptible de faire correspondre audit onzième signal électrique un quinzième signal électrique représentatif d'une incidence commandée, ledit deuxième commutateur reliant lesdits moyens engendrant ledit onzième signal électrique à ladite quatrième table pour la seconde de ses positions ;
- des deuxièmes moyens de commande dudit deuxième commutateur ;
- des deuxièmes moyens de comparaison comparant ledit septième signal représentatif de l'incidence à une valeur de consigne de protection d'incidence, lesdits deuxièmes moyens de comparaison contrôlant lesdits deuxièmes moyens de commande, de façon que ledit deuxième commutateur prenne respectivement sa première ou sa seconde position suivant qu'une troisième différence entre ledit septième signal et ladite valeur de consigne de protection d'incidence est positive, d'une part, ou négative ou nulle, d'autre part ;
- une cinquième table susceptible de faire correspondre audit septième signal représentatif de l'incidence un seizième signal représentatif d'une correction d'incidence ;
- des moyens pour former une quatrième différence entre lesdits quinzième et seizième signaux ; et
- des moyens pour transmettre auxdits moyens d'intégration, ledit douzième signal électrique lorsque ledit deuxième commutateur est dans sa première position, ou ladite quatrième différence lorsque ledit deuxième commutateur est dans sa seconde position.

De préférence, un tel système de protection à incidence comporte des moyens pour ajouter audit septième signal représentatif de l'incidence, avant d'être appliqué auxdits deuxièmes moyens de comparaison et à ladite cinquième table, des termes d'avance de phase, respectivement proportionnels audit huitième signal électrique représentatif de la vitesse de tangage et à la dérivée temporelle dudit dixième signal électrique représentatif de la vitesse dudit aéronef. Il peut également comporter des moyens pour corriger le signal à la sortie desdits moyens d'intégration à chaque basculement dudit deuxième commutateur, afin d'assurer la continuité des ordres adressés auxdites premières surfaces aérodynamiques de profondeur, malgré ledit basculement.

De même, afin d'obtenir une protection en facteur de charge vertical, on peut prévoir :

- un troisième commutateur, disposé entre lesdits moyens engendrant ledit onzième signal électrique et ladite mémoire engendrant ledit douzième signal électrique, ledit troisième commutateur reliant lesdits moyens et ladite mémoire pour la première de ses positions ;
- une sixième table, disposée en parallèle sur ladite mémoire et susceptible de faire correspondre audit onzième signal électrique un dix-septième signal électrique représentatif d'un facteur de charge vertical commandé, ledit troisième commutateur reliant lesdits moyens engendrant ledit onzième signal électrique à ladite sixième table pour la seconde de ses positions ;
- des troisièmes moyens de commande dudit troisième commutateur ;
- des troisièmes moyens de comparaison comparant un dix-huitième signal électrique représentatif du facteur de charge vertical actuel de l'aéronef à une valeur de consigne de protection en facteur de charge vertical, lesdits troisièmes moyens de comparaison contrôlant lesdits troisièmes moyens de commande, de façon que ledit troisième commutateur prenne respectivement sa première ou sa seconde position suivant qu'une cinquième différence entre ledit dix-huitième signal et ladite valeur de consigne de protection de facteur de charge vertical est positive d'une part, ou négative ou nulle d'autre part ;
- des quatrièmes moyens de comparaison comparant ledit onzième signal électrique à une valeur de consigne de protection en déplacement dudit premier organe d'actionnement, lesdits quatrièmes moyens de comparaison contrôlant lesdits troisièmes moyens de commande, de façon que ledit troisième commutateur prenne respectivement sa première ou sa seconde position suivant qu'une sixième différence entre ledit onzième signal et ladite valeur de consigne de protection en déplacement dudit premier organe d'actionnement est positive, d'une part, ou négative ou nulle, d'autre part ;
- lesdits troisièmes moyens de commande imposant ladite première position audit troisième commutateur seulement si lesdites cinquième et sixième différences sont simultanément positives ;

- une septième table susceptible de faire correspondre audit dix-huitième signal représentatif du facteur de charge vertical actuel un dix-neuvième signal représentatif d'une correction de facteur de charge vertical ;
- des moyens pour former une septième différence entre lesdits dix-septième et dix-neuvième signaux ; et
- des moyens pour transmettre auxdits moyens d'intégration, ledit douzième signal électrique lorsque ledit troisième commutateur est dans sa première position, ou ladite septième différence lorsque ledit troisième commutateur est dans sa seconde position.

Ainsi, on obtient une protection en facteur de charge vertical aussi bien en turbulences qu'à la suite d'une commande du pilote.

De préférence, un tel système à protection en facteur de charge vertical comporte des moyens pour ajouter audit dix-huitième signal représentatif du facteur de charge vertical actuel, avant d'être appliqué auxdits troisièmes moyens de comparaison et à ladite septième table, un terme d'avance de phase proportionnel audit huitième signal électrique représentatif de la vitesse de tangage. Il peut également comporter des moyens pour corriger le signal à la sortie desdits moyens d'intégration à chaque basculaient dudit troisième commutateur, afin d'assurer la continuité des ordres adressés auxdites premières surfaces aérodynamiques de profondeur, malgré ledit basculement.

On remarquera que, tout comme la protection en assiette, la protection en incidence et la protection en facteur de charge vertical s'ajoutent au système de pilotage conforme à l'invention sans en modifier la structure et/ou le réglage.

Dans le système de protection en facteur de charge vertical, afin de remédier à une éventuelle erreur statique entre le facteur de charge vertical commandé (la septième différence) et le facteur de charge vertical réel de l'aéronef, il est avantageux de prévoir des moyens de correction d'erreur statique. Avantageusement, de tels moyens comportent :

- une huitième table recevant ledit dix-septième signal et faisant correspondre à celui-ci un vingtième signal électrique représentatif d'un modèle désiré pour ledit facteur de charge vertical ;
- des moyens pour former et intégrer la différence entre ledit dix-huitième signal électrique représentatif du facteur de charge vertical actuel et ledit vingtième signal électrique ; et
- des moyens pour additionner ladite différence intégrée à ladite septième différence.

Dans le cas où l'on désire que le système conforme à la présente invention comporte, à la fois, les protections en assiette, en incidence et en facteur de charge vertical, on prévoit :

- à la place desdits premier, deuxième et troisième commutateurs, un quatrième commutateur à quatre positions qui relie lesdits moyens engendrant le onzième signal électrique respectivement à ladite mémoire, à ladite deuxième table, à ladite quatrième table et à ladite sixième table pour ses positions respectives ; et
- à la place desdits premiers, deuxièmes et troisièmes moyens de commande, des quatrièmes moyens de commande commandant ledit quatrième commutateur de façon que celui-ci occupe :
  - . sa première position si lesdites première, troisième, cinquième et sixième différences sont positives ;
  - . sa deuxième, troisième ou quatrième position respectivement, si la première, la troisième ou au moins l'une des cinquième ou sixième différences est nulle ou négative ; et
  - . celle de ses deuxième, troisième ou quatrième position qui correspond à une priorité si au moins deux desdites première, troisième, cinquième et sixième différence sont nulles ou négatives.

Les figures du dessin annexé feront bien comprendre comment l'invention peut être réalisée. Sur ces figures, des références identiques désignent des éléments semblables.

La figure 1 montre, en perspective du dessus, un avion civil gros porteur mettant en application le système de commande en profondeur et en poussée auquel se rapporte l'invention.

La figure 2 représente le schéma synoptique dudit système de commande en profondeur et en poussée auquel se rapporte l'invention.

La figure 3 donne le schéma synoptique d'un premier mode de réalisation dudit transducteur engendrant l'assiette commandée pour ledit avion, à partir du manche de celui-ci.

La figure 4 est une courbe expliquant le fonctionnement du transducteur de la figure 3.

Les figures 5 à 9 donnent le schéma synoptique de variantes de réalisation dudit transducteur.

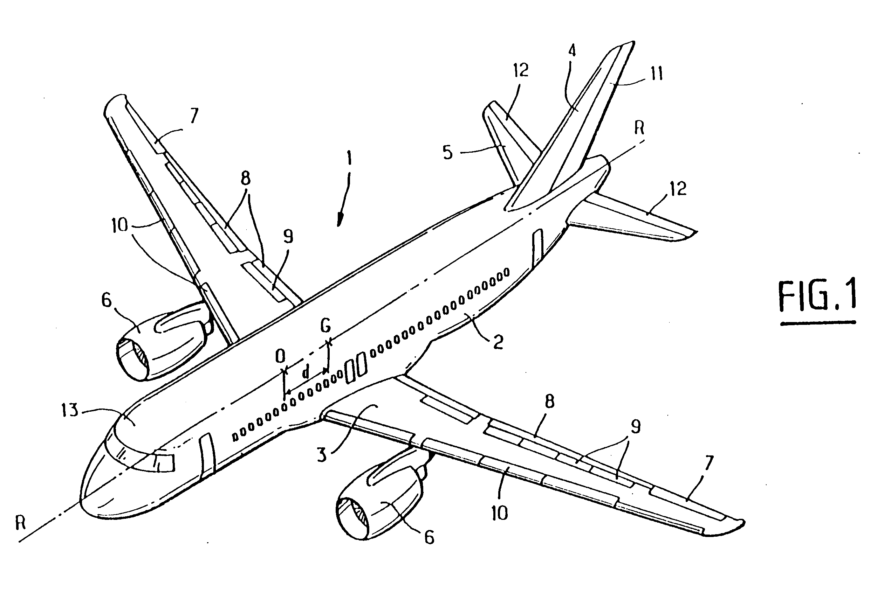

L'avion civil gros porteur 1, montré en perspective sur la figure 1, comporte un fuselage 2, des ailes 3, un empennage vertical 4 et un empennage horizontal 5. Il est propulsé par deux moteurs 6, accrochés sous les ailes 3.

Sur l'extrados des ailes 3 sont prévus des ailerons 7 de bord de fuite, des volets 8, des déflecteurs 9 et des becs 10 de bord d'attaque. De façon connue, certains des déflecteurs 9 sont utilisables comme aérofreins, d'autres comme déflecteurs de roulis en combinaison avec les ailerons 7 ; par ailleurs, ces déflecteurs 9 peuvent être utilisés comme volets déporteurs et, éventuellement en coopération avec les ailerons 7, ils peuvent exercer une fonction d'allègement de charge pour abaisser les efforts de flexion appliqués auxdites ailes 3.

Sur l'empennage vertical 4 est prévue une gouverne de direction 11, tandis que des gouvernes de profondeur 12 sont articulées sur le bord de fuite de l'empennage horizontal 5. Cet empennage 5 peut lui-même être mobile pour former un plan ou stabilisateur horizontal réglable susceptible d'être utilisé pour commander la profondeur de l'avion 1.

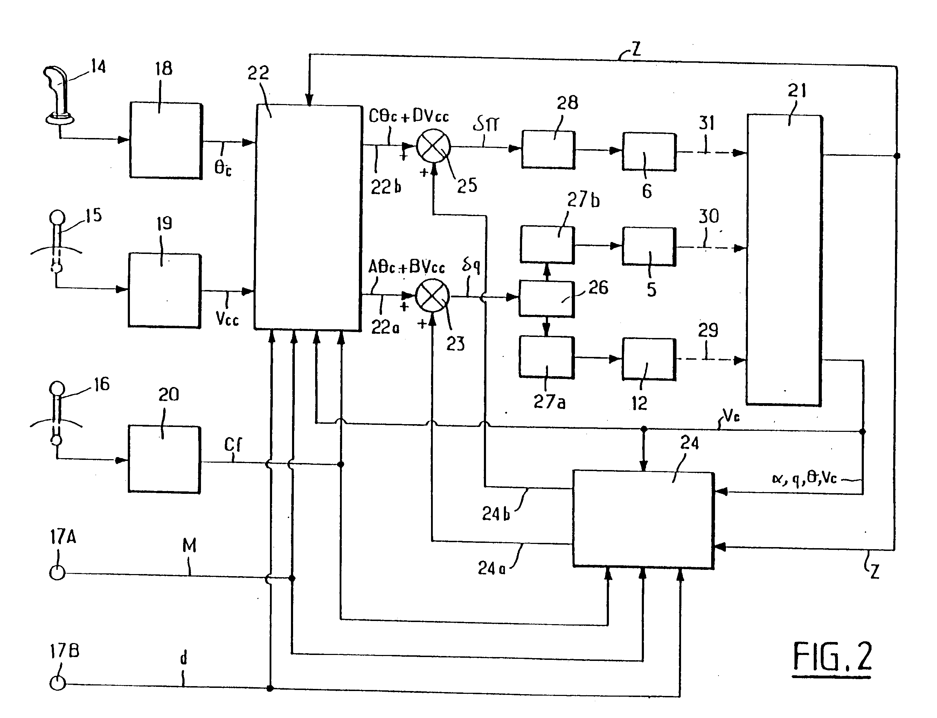

Pour commander la profondeur de l'avion 1, il est prévu dans le poste de pilotage 13 de celui-ci, au moins un manche 14, à la disposition d'un pilote (voir la figure 2). Le manche 14 commande les gouvernes de profondeur 12 et, éventuellement, l'empennage horizontal 5.

De plus, pour commander la poussée des moteurs 6, une manette des gaz 15 est disposée dans le poste de pilotage 13.

La présente invention ne concerne que la commande des gouvernes de profondeur 12 (et éventuellement de l'empennage horizontal 5) et celle des moteurs 6, de sorte que les commandes des ailerons 7, des volets 8, des déflecteurs 9 et des becs 10 ne seront pas décrites. Il est simplement rappelé que, de façon connue, en fonction de la phase de vol (vol de croisière, atterrissage, décollage, ...), lesdites surfaces aérodynamiques 7 à 10 sont soit sorties, soit rentrées et qu'à chaque phase de vol correspond une configuration particulière pour laquelle certaines desdites surfaces aérodynamiques 7 à 10 (notamment les becs et les volets) occupent des positions sorties et d'autres des positions rentrées déterminées, tandis que les cinématiques de commande des autres de ces surfaces aérodynamiques (notamment les ailerons et les déflecteurs) dépendent de cette configuration. Chacune desdites configurations est choisie par le pilote à l'aide d'un organe de sélection 16 (voir la figure 2).

Par ailleurs, à bord de l'avion 1, sont prévues des bornes 17A et 17B sur lesquelles sont respectivement disponibles des signaux électriques respectivement représentatifs de la masse M de l'avion 1 et de la distance $\underline{d}$ séparant, le long de l'axe longitudinal de roulis R-R de l'avion 1, le centre de gravité G de celui-ci d'une origine O. De tels signaux électriques peuvent provenir de dispositifs d'affichage (non représentés) sur lesquels le pilote affiche les grandeurs M et d au décollage. Par ailleurs, le signal sur la borne 17B peut également provenir d'un dispositif de calcul (non représenté) calculant en continu la position du centre de gravité G.

Comme le montre la figure 2, le système conforme à la présente invention comporte :
- un transducteur 18 transformant la position du manche 14 en signal électrique et délivrant à sa sortie un tel signal représentatif de l'assiette commandée $\theta c$ désirée par le pilote pour l'avion 1 et commandée par ledit pilote par actionnement correspondant du manche 14 ;
- un transducteur 19 transformant la position de la manette des gaz 15 en un signal électrique et délivrant à sa sortie un tel signal représentatif de la vitesse commandée Vcc désirée par le pilote pour l'avion 1 et commandée par lui par actionnement correspondant de ladite manette 15 ; et
- un transducteur 20 transformant la position de l'organe 16 de sélection de configurations et délivrant à sa sortie un tel signal représentatif de la configuration actuelle Cf, choisie par le pilote par actionnement correspondant dudit organe 16.

De plus, de façon connue, à bord de l'avion 1 est monté un dispositif 21, par exemple du type ADIRS (Air Data Inertial Reference System) susceptible de délivrer en continu quatre signaux électriques, respectivement représentatifs de l'incidence $\alpha$, de la vitesse de tangage q, de l'assiette longitudinale $\theta$ et de la vitesse Vc instantanées de l'avion 1, ledit dispositif 21 incorporant de plus un radioaltimètre ou analogue susceptible de délivrer en continu un signal électrique représentatif de l'altitude de vol Z.

Ci-après, les différents signaux électriques définis ci-dessus seront désignés par les grandeurs qu'ils représentent respectivement.

Comme on peut le voir sur la figure 2, le système selon l'invention comporte de plus un dispositif de calcul 22 recevant les signaux $\theta$c, Vcc, Cf, M, d, Vc et Z et pourvu de deux sorties 22a et 22b. Sur la sortie 22a du dispositif 22 apparaît un signal qui est une combinaison linéaire des signaux $\theta$c et Vcc, du type A$\theta$c + BVcc, expression dans laquelle les coefficients A et B dépendent des signaux Cf, M, d, Vc et Z. De même, sur la sortie 22b du dispositif apparaît un signal qui est une combinaison linéaire des signaux $\theta$c et Vcc, du type C$\theta$c + DVcc, ex pression dans laquelle les coefficients C et D dépendent des signaux Cf, M, d, Vc et Z.

On voit que le dispositif de calcul 22 peut comporter une table ou matrice contenant des pluralités d'ensembles de quatre coefficients A, B, C et D, un de ces ensembles particuliers étant choisi en fonction des valeurs instantanées de Cf, M, d, Vc et Z. Eventuellement, l'ensemble particulier de quatre coefficients utilisé résulte de l'interpolation, en fonction des cinq valeurs instantanées précitées, entre deux ensembles A, B, C et D emmagasinés dans ladite table ou matrice.

Le signal A$\theta$c + BVcc apparaissant à la sortie 22a du dispositif de calcul 22 est adressé à l'une des entrées d'un additionneur 23, dont l'autre entrée reçoit un signal provenant de la sortie 24a d'un dispositif de calcul 24. Ce dispositif de calcul 24 reçoit les signaux Cf, M, d, Z, $\alpha$, q, $\theta$ et Vc et délivre à sa sortie 24a une combinaison linéaire des signaux $\alpha$, q, $\theta$ et Vc, du type a$\alpha$ + bq + c$\theta$+ dVc, expression dans laquelle les coefficients a, b, c et d dépendent des signaux Cf, M, d, Vc et Z. Ainsi, à la sortie de l'additionneur 23 apparaît un signal $\delta$q, tel que :

(1)     $\delta q = A\theta c + BVcc + a\alpha + bq + c\theta + dVc.$

Par ailleurs, le signal C$\theta$c + DVcc apparaissant à la sortie 22b du dispositif de calcul 22 est adressé à l'une des entrées d'un additionneur 25, dont l'autre entrée reçoit un signal provenant d'une autre sortie 24b du dispositif de calcul 24. Celui-ci délivre sur sa sortie 24b une combinaison linéaire des signaux $\alpha$, q, $\theta$ et Vc, du type e$\alpha$ + fq + g$\theta$ + hVc, expression dans laquelle les coefficients e, f, g et h dépendent des signaux Cf, M, d, Vc et Z. Ainsi, à la sortie de l'additionneur 25 apparaît un signal $\delta\pi$, tel que :

(2)     $\delta\pi = C\theta c + DVcc + e\alpha + fq + g\theta + hVc.$

On voit que le dispositif de calcul 24 peut comporter une table ou matrice contenant des pluraliés d'ensembles de huit coefficients a, b, c, d, e, f, g et h, un de ces ensembles particuliers étant choisi en fonction des valeurs de Cf, M, d, Vc et Z.

Le signal $\delta$q ainsi obtenu, apparaissant à la sortie de l'additionneur 23, est utilisé comme ordre pour la commande en profondeur de l'avion 1. A cet effet, dans le cas où l'empennage horizontal 5 est du type stabilisateur horizontal réglable, le signal $\delta$q est adressé à un dispositif de répartition 26, chargé, en fonction des efficacités propres dudit stabilisateur horizontal réglable 5 et des gouvernes de profondeur 12, de répartir ledit signal $\delta$q entre le dispositif de commande 27a des gouvernes 12 et le dispositif de commande 27b dudit empennage horizontal variable. Bien entendu, dans le cas où l'empennage horizontal 5 est fixe, la totalité du signal $\delta$q est adressé aux gouvernes de profondeur 12.

De façon semblable, le signal $\delta\pi$, calculé de la façon décrite ci-dessus et apparaissant à la sortie de l'additionneur 25, est utilisé comme ordre pour la commande de la poussée des moteurs 6 de l'avion 1. Pour cela, le signal est adressé au dispositif de commande 28 de ceux-ci. Le dispositif de commande 28 est par exemple du type FADEC (Full Authority Digital Engine Control).

Il va de soi que l'action de l' empennage horizontal 5, des gouvernes 12 et des moteurs 6 sous l'action des signaux $\delta$q et $\delta\pi$ modifient les valeurs de $\alpha$, q, $\theta$ et Vc, détectées par le dispositif 21, ce qui, sur la figure 2, est représenté par des flèches en tirets 29,30,31.

Ainsi, si le pilote agit sur le manche 14 pour commander une assiette $\theta$c désirée, l'ordre de commande en profondeur $\delta$q prend en compte immédiatement la valeur de cette assiette commandée pour actionner les gouvernes de profondeur 12 et/ou l'empennage horizontal réglable 5. L'avion 1 prend donc cette assiette $\theta$c avec une dynamique déterminée par les retours en incidence $\alpha$, en vitesse de tan-

gage q et en assiette θ, déterminés par les termes aα, bq et cθ de l'expression (1) définie ci-dessus. Simultanément à l'action sur les gouvernes de profondeur 12 et/ou sur l'empennage horizontal réglable 5, l'ordre de commande en poussée δπ tient compte de la valeur de l'assiette θc commandée grâce au terme Cθc et les retours eα, fq et gθ de l'expression (2) ajustent en permanence la poussée des moteurs 6 pour que la variation d'assiette se fasse à vitesse constante. De ce fait, dans le cas d'une commande d'assiette, les retours dVc et hVc sur les ordres δq et δπ n'ont aucune influence.

Si, maintenant, le pilote agit sur la manette des gaz 15 pour faire varier la vitese commandée Vcc, les moteurs 6 sont immédiatement sollicités par l'ordre δπ et il en est de même des gouvernes de profondeur 12 et/ou de l'empennage horizontal réglable 5, à cause du terme BVcc de l'ordre δq. Au fur et à mesure que la vitesse de l'avion 1 varie, les retours dVc et aα sur l'ordre δq modulent le braquage desdites gouvernes de profondeur 12 et/ou de l'empennage horizontal réglable 5 pour maintenir une assiette θc constante, tandis que les retours eα et hVc sur l'ordre δπ fixent la dynamique de la variation de vitesse de l'avion 1.

Si une rafale de vent longitudinale (frontale ou arrière) se produit, il en résulte une variation de Vc. Grâce aux termes dVc de l'ordre δq et hVc de l'ordre δπ, il apparaîtra une modification compensatrice (en plus ou en moins) de la vitesse et de l'assiette de l'avion 1. Dans ce cas, l'incidence α, la vitesse de tangage q et l'assiette θ varient peu, de sorte que le confort des passagers est assuré en tout point de l'avion 1.

Si une rafale de vent verticale se produit, il en résulte une variation de l'incidence α. Les termes aα de l'ordre δq et eα de l'ordre δπ permettent alors de maintenir l'assiette longitudinale et de modifier la poussée des moteurs 6 pour rester à vitesse constante.

L'étude mathématique du système de commande intégrée conforme à l'invention, qui vient d'être décrit ci-dessus en regard de la figure 2, montre que, en ce qui concerne les rapports entre l'assiette longitudinale réelle θ de l'avion 1 et l'assiette longitudinale commandée θc, ledit système se comporte comme un filtre du deuxième ordre dont la fonction de transfert est telle que :

$$(3) \quad \theta/\theta c = 1/1 + k1.p + k2.p^2$$

k1 et k2 étant des constantes et p la variable de la transformation de Laplace.

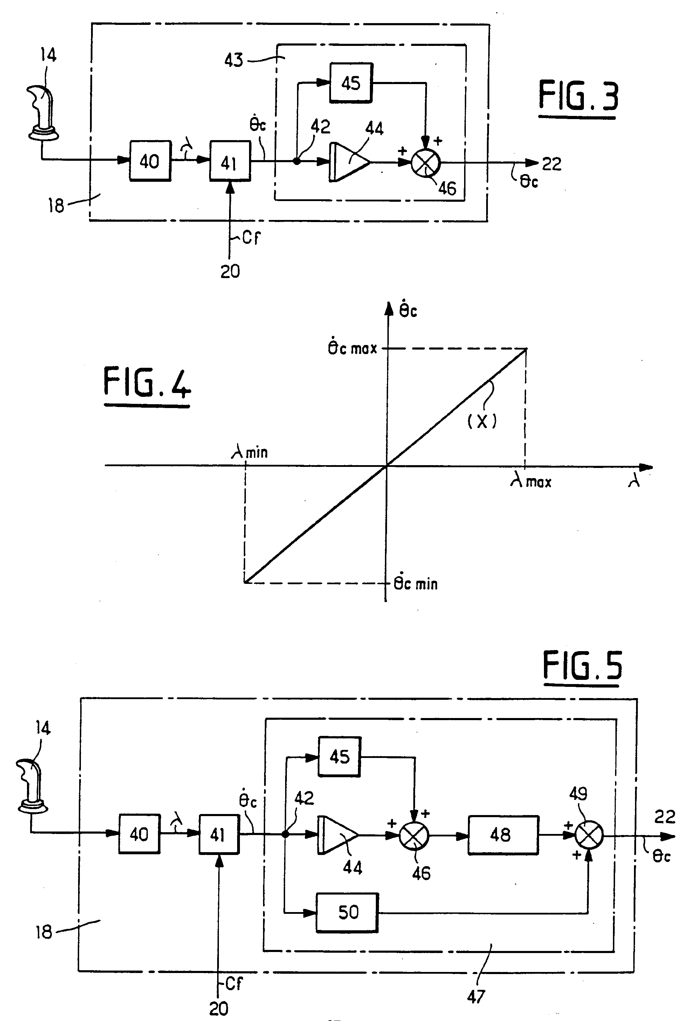

Sur la figure 3, on a représenté le schéma synoptique d'un premier mode de réalisation du transducteur 18 délivrant l'assiette commandée θc. Ce transducteur 18 comporte un dispositif 40, par exemple du type potentiomètre ou analogue, permettant d'engendrer un signal électrique λ, représentatif de la position de basculaient du manche 14 par rapport à une position neutre, ainsi qu'une mémoire 41 recevant ledit signal électrique λ et le signal Cf provenant du transducteur 20. Pour chaque configuration possible des surfaces aérodynamiques 7 à 10 et de l'éventuel stabilisateur horizontal réglable 5, la mémoire 41 fait correspondre une valeur de vitesse de tangage de consigne θ̇c. Comme le montre la courbe (X) de la figure 4, à titre d'exemple non limitatif, à chaque valeur de λ comprise entre une valeur minimale min et une valeur maximale λmax correspond une valeur θ̇c comprise entre une valeur minimale θ̇cmin et une valeur maximale θ̇cmax. Ainsi, grâce au dispositif 40 et à la mémoire 41, on convertit le braquage du manche 14 en une vitesse de tangage commandée. Toutefois, il est important de pouvoir garder le maximum de maniabilité de pilotage à l'aide du manche 14 ; à cet effet, on désire par exemple que :

- sur un ordre du manche 14 correspondant au cabrage maximum, on puisse atteindre un facteur de charge égal à 2,5 g en configuration lisse (les volets 8 et les becs 10 étant alors en position neutre) ou avec seulement les becs 10 sortis, et un facteur de charge égal à 2 g dans les autres configurations ;
- sur un ordre du manche 14 correspondant au piqué maximum, on puisse atteindre un facteur de charge égal à -g en configuration lisse ou avec seulement les becs et un facteur de charge nul dans les autres configurations.

Il est donc nécessaire qu'il existe une courbe (X) de correspondance entre λ et θ̇c pour chaque configuration des surfaces 7 à 10.

Aussi, la mémoire 41 contient autant de tables de correspondance (représentatives chacune d'une courbe (X)) qu'il existe de configurations différentes, et la table appropriée est choisie en fonction de la configuration actuelle Cf, identifiée par le transducteur 20.

Le contenu de chaque table de la mémoire 41 est déterminé par calcul théorique et emmagasiné dans ladite mémoire.

Pour pouvoir obtenir le signal représentatif de l'assiette commandée θc, le transducteur 18 comporte des moyens d'intégration 43, pourvus d'un intégrateur 44. Afin d'éviter le retard dans la génération du signal θc dû à l'intégrateur 44, on prévoit, en parallèle sur celui-ci, un amplificateur 45 d'avance de phase, présentant un gain k et recevant le signal de vitesse de tangage de consigne θ̇c d'une borne 42 reliée en commun aux entrées de l'intégrateur 44 et dudit amplificateur et un additionneur 46, additionnant les signaux de sortie de l'intégrateur 44 et de l'amplificateur 45. Ainsi, la sortie de l'additionneur 46 - qui forme la sortie du transducteur 18 en direction du dispositif de calcul 22 - délivre une valeur d'assiette commandée θc instantanée en réponse à un braquage du manche 14.

On voit que la fonction de transfert des moyens intégrateurs 43 est :

$$(4) \quad \theta c/\dot{\theta}c = (1 + kp)/p$$

de sorte que la fonction de transfert globale du système entre $\theta$ et $\dot\theta c$ est :

(5)     $\theta/\dot\theta c = (1 + kp)/p(1 + k1p + k2p^2)$

compte tenu de la fonction de transfert (3).

Dans la variante de réalisation du transducteur 18 représenté sur la figure 5, on retrouve le dispositif 40 et la mémoire 41, mais les moyens d'intégration 47 sont différents des moyens d'intégration 43 de la figure 3. Comme les moyens d'intégration 43, les moyens d'intégration 47 comportent l'agencement précédemment décrit de l'intégrateur 44, de l'amplificateur 45 et de l'additionneur 46. Dans ce cas, le gain de l'amplificateur 45 est choisi égal à k1 et de plus, on prévoit un filtre 48 recevant la sortie de l'additionneur 45 et adressant son signal de sortie à une entrée d'un autre additionneur 49. Le filtre 48 présente une fonction égale à 1/1 + $\tau$p, $\tau$ étant une constante de temps. Par ailleurs, le transducteur 18 de la figure 5 comporte un autre filtre 50, disposé en parallèle sur l'intégrateur 44, l'additionneur 45 et le filtre 48. En effet, le filtre 50 reçoit de la borne commune 42 le signal de vitesse de tangage de consigne $\dot\theta c$ et sa sortie est reliée à une autre entrée de l'additionneur 49. Le filtre 50 a une fonction égale à k2p/1 + $\tau$p et la sortie de l'additionneur 49 forme la sortie du transducteur 18 en direction du dispositif de calcul 22.

Le calcul montre aisément que la fonction de transfert des moyens intégrateurs 47 est :

(6)     $\theta c/\dot\theta c = (1 + k1p + k2p^2)/(1 + \tau p)$

de sorte que la fonction de transfert globale du système entre $\theta$ et $\dot\theta c$ est alors :

(7)     $\theta/\dot\theta c = 1/p(1 + \tau p)$

Ainsi, la chaîne d'élaboration de $\theta c$ à partir de $\dot\theta c$ se comporte, dans le cas de la figure 5, comme l'association d'un intégrateur (terme 1/p) avec un filtre de premier ordre (terme 1/1 + $\tau$p).

De plus, en faisant varier la constante de temps $\tau$ des filtres 48 et 50, on fait varier le temps de réponse des moyens d'intégration 47 et donc les sollicitations sur les gouvernes 12 et sur les moteurs 6. En contrôlant la constante de temps $\tau$ des filtres 48 et 50, on peut éviter les dépassements transitoires en profondeur et en poussée qui seraient engendrés par des temps de réponse trop courts du transducteur 18.

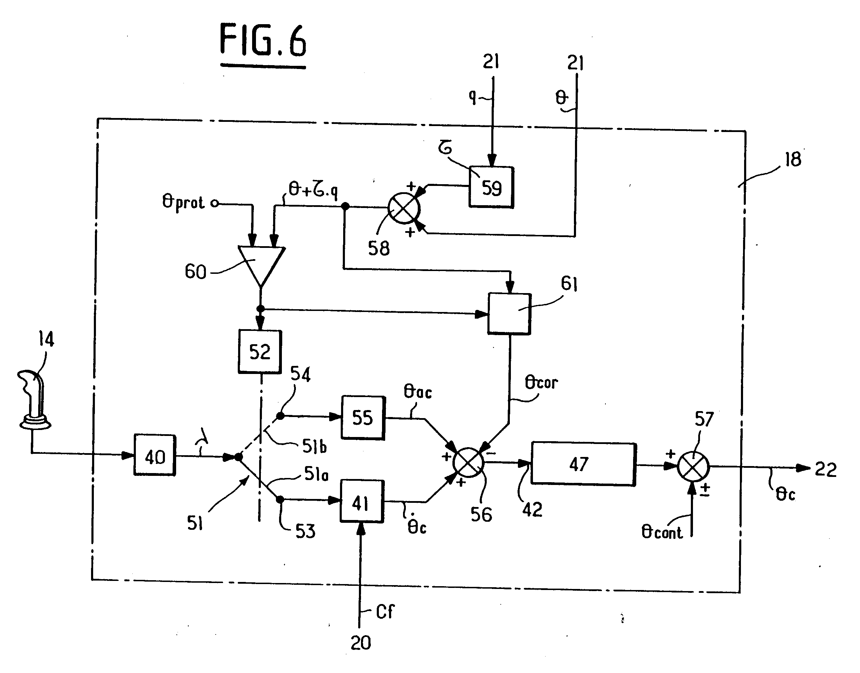

Sur la figure 6, on a représenté un autre mode de réalisation du transducteur 18, comportant une protection en assiette. Dans ce mode de réalisation, à la sortie du dispositif 40 actionné par le manche 14, on prévoit un commutateur 51 à deux positions 51a et 51b (cette dernière position étant représentée en pointillés), commandé par un dispositif de commande 52. La sortie 53 du commutateur 51 est reliée à la mémoire 41, décrite ci-dessus, recevant le signal Cf du transducteur 20. La sortie 54 du commutateur 51 est reliée à une table 55, susceptible de délivrer une valeur d'assiette commandée $\theta$ac pour toute valeur du signal $\lambda$ engendré par le dispositif 40. Les sorties de la mémoire 41 et de la table 55 sont reliées à deux entrées positives d'un additionneur 56, comportant de plus une entrée négative. La sortie de l'additionneur 56 est reliée à l'entrée 42 des moyens d'intégration 47, décrits ci-dessus. La sortie desdits moyens d'intégration 47 alimente une entrée positive d'un additionneur 57, dont la sortie forme la sortie du transducteur 18 et adresse la valeur d'assiette commandée $\theta$c au dispositif de calcul 22.

Par ailleurs, le transducteur 18 de la figure 6 comporte un additionneur 58, recevant respectivement sur ses deux entrées, en provenance du dispositif ADIRS 21, d'une part directement l'assiette actuelle $\theta$ de l'avion 1, d'autre part, par l'intermédiaire d'un amplificateur 59, la vitesse de tangage actuelle $\underline{q}$ dudit avion. Avantageusement, le gain de l'amplificateur 59 est égal à la constante de temps $\tau$ des filtres 48 et 50.

Ainsi, à la sortie de l'additionneur 58, apparaît un signal $\theta + \tau.q$, dans lequel le terme $\tau.q$ constitue une avance de phase pour le terme $\theta$.

Dans un comparateur 60, le signal $\theta + \tau.q$ est comparé à un signal de référence de protection en assiette $\theta$prot, le résultat de la comparaison effectuée par le comparateur 60 alimentant le dispositif de commande 52, commandant le commutateur 51. Si le signal $\theta + \tau.q$ est inférieur à $\theta$prot, le dispositif de commande 51 impose au commutateur 51 la position 51a, de sorte qu'alors le signal $\lambda$ issu du dispositif 40 est adressé à la mémoire 41. En revanche, si le signal $\theta + \tau.q$ est supérieur ou égal à $\theta$prot, le dispositif de commande 52 impose au commutateur 51 la position 51b, de sorte que, dans ce cas, ledit signal $\lambda$ est transmis à la table 55.

Par ailleurs, le transducteur 18 de la figure 6 comporte une table 61 recevant le signal $\theta + \tau.q$ engendrée par l'additionneur 58, ainsi que le signal de sortie du comparateur 60 et susceptible d'engendrer à sa sortie, reliée à l'entrée négative de l'additionneur 56, une valeur de correction d'assiette $\theta$cor pour chaque valeur du signal $\theta + \tau.q$, si le signal $\theta + \tau.q$ est supérieur ou égal à la valeur de consigne $\theta$prot.

Ainsi, le transducteur 18 de la figure 6 fonctionne de la façon suivante.

Si le signal $\theta + \tau.q$ est inférieur à la valeur de consigne $\theta$prot, le signal $\lambda$ est adressé à la mémoire 41 et celle-ci adresse aux moyens d'intégration 47, à travers l'additionneur 56, le signal $\dot\theta c$, comme cela est le cas dans le mode de réalisation de la figure 5. Ces moyens d'intégration 47 adressent donc au dispositif de calcul 22 le signal de commande d'assiette $\theta$c, à travers l'additionneur 57. Les additionneurs 56 et 57 ne recevant alors aucun autre signal que ceux indiqués ci-dessus, ils n'interviennent pas dans la transmission desdits signaux $\dot\theta c$ et $\theta$c, de sorte que le fonctionnement du transducteur 18 de la figure 6 est, dans ce cas, identique au fonctionnement du transducteur 18 de la figure 5.

En revanche, si le signal $\theta + \tau.q$ est supérieur ou égal à la valeur de consigne θprot, le signal λ est adressé à la table 55 et celle-ci adresse à l'additionneur 56 une valeur d'assiette commandée θac. De plus, la table 61 adresse audit additionneur 56 une valeur de correction d'assiette θcor, de sorte que le signal à la sortie de l'additionneur 56 est alors θac - θcor. Ce dernier signal traverse les moyens d'intégration 47 à travers le filtre 50 et, dans l'additionneur 57, il lui est ajouté ou soustrait un signal de compensation θcont. Ainsi, à la sortie du dispositif 18 de la figure 6, apparaît alors un signal d'assiette commandée θc égal à θac - θcor ± θcont. Le signal de compensation θcont a pour objet d'assurer le passage sans à-coup sur les gouvernes de profondeur 12 de la commande en $\dot{\theta}$c à la commande en θac - θcor et vice-versa. La continuité entre le pilotage normal en $\dot{\theta}$c et le pilotage en protection d'assiette est donc assurée par ledit signal de compensation θcont.

On voit ainsi que, si pour le confort des passagers de l'avion 1, on désire limiter l'assiette θ à une valeur maximale θmax (par exemple égale à 35°), grâce au terme d'avance de phase τ.q, il est possible d'anticiper le processus de protection en assiette (passage du commutateur 51 de la position 51a à la position 51b)) et de déclencher cette protection pour une valeur d'assiette égale à θprot, inférieure à θmax (par exemple θprot est égale à 30°).

En protection d'assiette, le signal θac - θcor sera déterminé pour que θc soit égale, d'une part, à θprot, lorsque le manche 14 est en position neutre et, d'autre part, à θmax, lorsque le manche 14 est dans sa position correspondant au cabrage maximal.

On remarquera qu'au lieu d'être reliée à une entrée positive de l'additionneur 56, la sortie de la mémoire 41 pourrait être reliée directement à l'entrée 42 des moyens d'intégration 47.

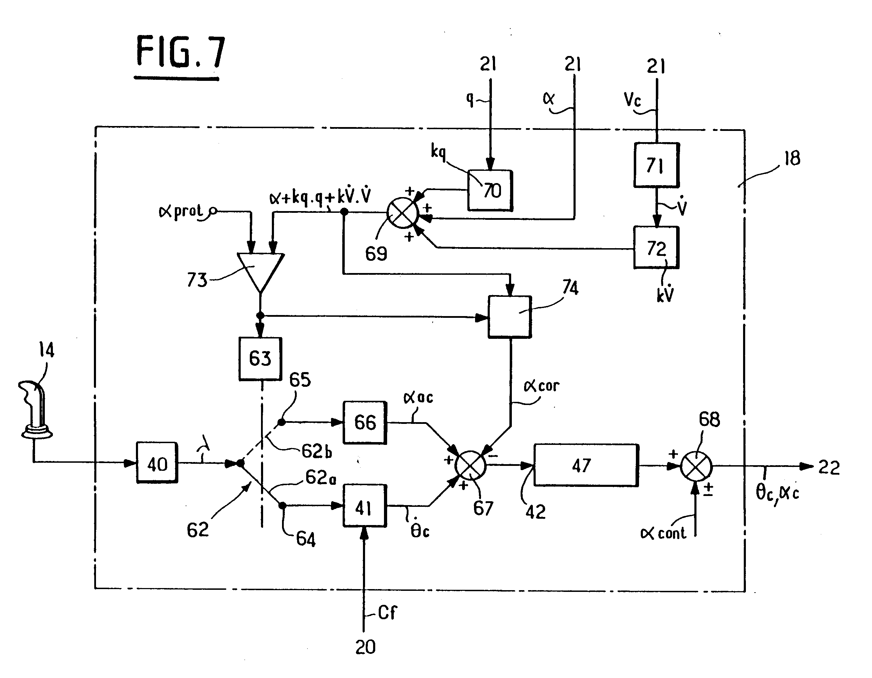

Sur la figure 7, on a représenté encore un autre mode de réalisation du transducteur 18, comportant une protection en incidence pour éviter tout décrochage de l'avion 1. On remarquera que :
- quand la poussée des moteurs 6 n'est pas saturée, la vitesse Vc de l'avion 1 est constante, de sorte que l'on contrôle parfaitement l'incidence en régime permanent. En revanche, en régime transitoire, l'assiette longitudinale réagissant plus vite que la pente, l'incidence peut atteindre des valeurs non acceptables, qu'il est nécessaire de limiter ;
- à poussée fixe ou saturée, lors d'une mise à cabrer de l'avion 1, la vitesse décélère et la diminution de portance est compensée par une augmentation d'incidence.

Aussi, pour éviter l'incidence excessive qui peut apparaître dans les deux cas précités, il est indispensable de prévoir, respectivement pour anticiper le premier et le second cas, un terme d'avance de phase en vitesse de tangage q et un terme d'avance de phase en $\dot{V}$, comme cela apparaîtra ci-après de la description du mode de réalisation du transducteur 18, représenté sur la figure 7.

Dans ce dernier mode de réalisation, à la sortie du dispositif 40 actionné par le manche 14, on prévoit un commutateur 62 à deux positions 62a et 62b (cette dernière position étant représentée en pointillés), commandé par un dispositif de commande 63. La sortie 64 du commutateur 62 est reliée à la mémoire 41, décrite ci-dessus, recevant le signal Cf du transducteur 20. La sortie 65 du commutateur 61 est reliée à une table 66, susceptible de délivrer une valeur d'incidence commandée αac pour toute valeur du signal λ engendré par le dispositif 40. Les sorties de la mémoire 41 et de la table 66 sont reliées à deux entrées positives d'un additionneur 67, comportant de plus une entrée négative. La sortie de l'additionneur 67 est reliée à l'entrée 42 des moyens d'intégration 47, décrits ci-dessus. La sortie desdits moyens d'intégration 47 alimente une entrée positive d'un additionneur 68, dont la sortie forme la sortie du transducteur 18 et adresse soit une valeur d'assiette commandée θc, soit une valeur d'incidence commandée αc, au dispositif de calcul 22.

Par ailleurs, le transducteur 18 de la figure 6 comporte un additionneur 69, recevant respectivement sur ses trois entrées, en provenance du dispositif ADIRS 21 :
- par une liaison directe, l'incidence actuelle de l'avion 1 ;
- par l'intermédiaire d'un amplificateur 70 de gain kq, la vitesse de tangage actuelle q dudit avion ; et
- à travers un différentiateur 71 et un amplificateur 72 de gain k$\dot{V}$, la vitesse Vc dudit avion.

Ainsi, à la sortie de l'additionneur 69, apparaît un signal α + kq.q + k$\dot{V}$.$\dot{V}$, dans lequel les termes kq.q et k$\dot{V}$.$\dot{V}$ constituent des avances de phase pour le terme α ($\dot{V}$ étant la dérivée temporelle de Vc donnée par le différentiateur 71).

Dans un comparateur 73, le signal α + kq.q + k$\dot{V}$.$\dot{V}$ est comparé à un signal de référence de protection en incidence αprot, le résultat de la comparaison effectuée par le comparateur 73 alimentant le dispositif de commande 63, commandant le commutateur 62. Si le signal α + kq.q + k$\dot{V}$.$\dot{V}$ est inférieur à αprot, le dispositif de commande 63 impose au commutateur 62 la position 62a, de sorte qu'alors le signal λ issu du dispositif 40 est adressé à la mémoire 41. En revanche, si le signal α + kq.q + k$\dot{V}$.$\dot{V}$ est supérieur ou égal à αprot, le dispositif de commande 63 impose au commutateur 62 la position 62b, de sorte que, dans ce cas, ledit signal λ est transmis à la table 66.

Par ailleurs, le transducteur 18 de la figure 7 comporte une table 74 recevant le signal α + kq.q + k$\dot{V}$.$\dot{V}$ engendrée par l'additionneur 70, ainsi que le signal de sortie du comparateur 73, et susceptible d'engendrer à sa sortie, reliée à l'entrée négative de l'additionneur 56, une valeur de correction d'incidence αcor pour chaque valeur du signal α + kq.q + k$\dot{V}$.$\dot{V}$, si ce signal est supérieur ou égal à la valeur de consigne αprot.

Ainsi, le transducteur 18 de la figure 7 fonctionne de la façon suivante.

Si le signal α + kq.q+k$\dot{V}$.$\dot{V}$ est inférieur à la valeur de consigne αprot, le signal λ est adressé à la mémoire 41 et celle-ci adresse aux moyens d'intégration 47, à travers l'additionneur 67, le signal $\dot{\theta}$c, comme cela est le cas dans le mode de réalisation de la figure 5. Ces moyens d'intégration 47 adressent donc au dispositif de calcul 22 le signal de commande d'assiette θc, à travers l'additionneur 68. Les additionneurs 67 et 68 ne recevant alors aucun autre signal que ceux indiqués ci-dessus, ils n'interviennent pas dans la transmission desdits signaux $\dot{\theta}$c et θc, de sorte que le fonctionnement du transducteur 18 de la figure 7 est, dans ce cas, identique au fonctionnement du transducteur 18 de la figure 5.

En revanche, si le signal α + kq.q + k$\dot{V}$.$\dot{V}$ est supérieur ou égal à la valeur de consigne αprot, le signal λ est adressé à la table 66 et celle-ci adresse à l'additionneur 67 une valeur d'incidence commandée αac. De plus, la table 74 adresse audit additionneur 67 une valeur de correction d'incidence αcor, de sorte que le signal à la sortie de l'additionneur 67 est alors αac - αcor. Ce dernier signal traverse les moyens d'intégration 47 à travers le filtre 50 et, dans l'additionneur 68, il lui est ajouté ou soustrait un signal de compensation αcont. Ainsi, à la sortie du dispositif 18 de la figure 7, apparaît alors un signal d'incidence commandée αc égal à αac - αcor + αcont. Le signal de compensation αcont a pour objet d'assurer le passage sans à-coup sur les gouvernes de profondeur 12 de la commande en $\dot{\theta}$c a la commande en αac - αcor et vice-versa. La continuité entre le pilotage normal en $\dot{\theta}$c et le pilotage en protection d'incidence est donc assurée par ledit signal de compensation αcont.

On voit ainsi que, si pour éviter les décrochages de l'avion 1, on désire limiter l'incidence α à une valeur maximale αmax (par exemple égale à 15° en configuration d'atterrissage et à 17°5 pour les autres configurations), grâce aux termes d'avance de phase kq.q et k$\dot{V}$.$\dot{V}$, il est possible d'anticiper le processus de protection en incidence (passage du commutateur 62 de la position 62a à la position 62b) et de déclencher cette protection pour une valeur d'incidence égale à αprot, inférieure à αmax (par exemple prot est égale à 12°).

En protection d'incidence, le signal αac - αcor sera déterminé pour que α soit égale, d'une part, à αprot, lorsque le manche 14 est en position neutre et, d'autre part, à αmax, lorsque le manche 14 est dans sa position correspondant au cabrage maximal.

On constatera aisément que le signal $\dot{\theta}$c issu de la mémoire 41 pourrait être adressé directement à l'entrée 42 des moyens d'intégration 47, au lieu de transiter à travers l'additionneur 67.

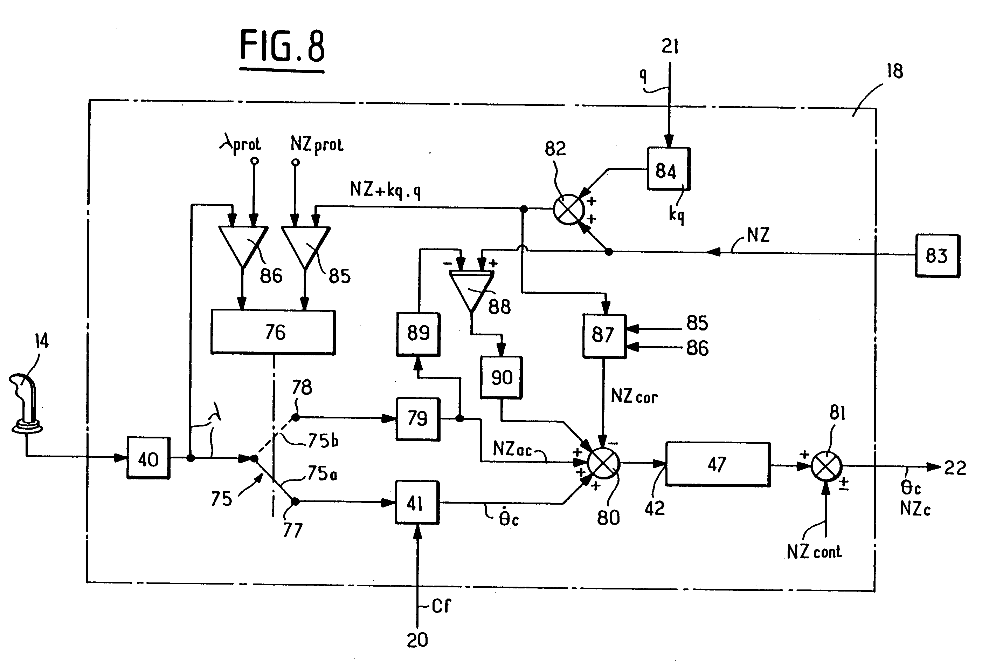

Sur la figure 8, on a représenté encore un autre mode de réalisation du transducteur 18, comportant une protection en facteur de charge vertical. Dans ce mode de réalisation, à la sortie du dispositif 40 actionné par le manche 14, on prévoit un commutateur 75 à deux positions 75 à 75b (cette dernière position étant représentée en pointillés), commandé par un dispositif de commande 76. La sortie 77 du commutateur 75 est reliée à la mémoire 41, décrite ci-dessus, recevant le signal Cf du transducteur 20. La sortie 78 du commutateur 75 est reliée à une table 79, susceptible de délivrer une valeur de facteur de charge vertical commandé NZac pour toute valeur du signal λ engendré par le dispositif 40. Les sorties de la mémoire 41 et de la table 79 sont reliées à deux entrées positives d'un additionneur 80, comportant de plus une entrée négative et une autre entrée positive. La sortie de l'additionneur 80 est reliée à l'entrée 42 des moyens d'intégration 47, décrits ci-dessus. La sortie desdits moyens d'intégration 47 alimente une entrée positive d'un additionneur 81, dont la sortie forme la sortie du transducteur 18 et adresse soit une valeur d'assiette commandée θc, soit une valeur de facteur de charge vertical commandé NZc, au dispositif de calcul 22.

Par ailleurs, le transducteur 18 de la figure 8 comporte un additionneur 82, recevant respectivement sur ses deux entrées, d'une part un signal électrique représentatif du facteur de charge vertical instantané NZ mesuré par les accéléromètres 83 montés à bord de l'avion 1, d'autre part, par l'intermédiaire d'un amplificateur 84 de gain égal à kq, la vitesse de tangage actuelle q dudit avion, délivrée par le dispositif ADIRS 21.

Ainsi, à la sortie de l'additionneur 82, apparaît un signal NZ + kq.q, dans lequel le terme kq.q constitue une avance de phase pour le terme NZ.

Dans un comparateur 85, le signal NZ + kq.q est comparé à un signal de référence de protection en facteur de charge vertical NZprot, le résultat de la comparaison effectuée par le comparateur 85 alimentant le dispositif de commande 76, commandant le commutateur 75. Si le signal NZ + kq.q est inférieur à NZprot, le dispositif de commande 76 impose au commutateur 75 la position 75a, de sorte qu'alors le signal λ issu du dispositif 40 est adressé à la mémoire 41. En revanche, si le signal NZ + kq.q est supérieur ou égal à NZprot, le dispositif de commande 76 impose au commutateur 75 la position 75b, de sorte que, dans ce cas, ledit signal λ est transmis à la table 79.

De plus, le système de la figure 8 comporte un autre comparateur 86, dans lequel le signal λ provenant du dispositif 40 est comparé à un signal de référence de protection λprot, le résultat d'une telle comparaison étant adressé audit dispositif de commande 76, actionnant le commutateur 75. Si le signal λ est inférieur à λprot, le dispositif de commande 76 impose au commutateur 75 la position 75a, de sorte qu'alors le signal λ est adressé à la mémoire 41. En revanche, si le signal λ est supérieur ou égal à λprot, le dispositif de commande 76 impose au commutateur 75 la position 75b, de sorte que, dans ce cas, le signal λ est transmis à la table 79.

Il en résulte donc que le dispositif de commande 76 réagit à la fois aux ordres issus des comparateurs 85 et 86 ; il suffit qu'un seul des signaux NZ + kq.q ou λ dépasse ou égale la consigne NZprot ou λprot correspondante pour que le commutateur 75 occupe la position 75b. En d'autres termes, le commutateur 75 occupe la position 75a seulement si, à la fois, lesdits signaux NZ + kq.q et λ sont inférieurs à leurs consignes NZprot et λprot respectives.

Par ailleurs, le transducteur 18 de la figure 8 comporte une table 87 recevant le signal NZ + kq.q engendré par l'additionneur 82, ainsi que le signal de sortie des comparateurs 85 et 86, et susceptible d'engendrer à sa sortie, reliée à l'entrée négative de l'additionneur 80, une valeur de correction de facteur de charge vertical NZcor pour chaque valeur du signal NZ + kq.q, si au moins l'un des signaux λ et NZ + kq.q est supérieur ou égal à la valeur de consigne λ prot ou NZprot respective.

Ainsi, le transducteur 18 de la figure 8 fonctionne de la façon suivante.

Si le signal λ est inférieur à la valeur de consigne λprot et si le signal NZ + kq.q est inférieur à la valeur de consigne NZprot, le signal λ est adressé à la mémoire 41 et celle-ci adresse aux moyens d'intégration 47, à travers l'additionneur 80, le signal θ̇c, comme cela est le cas dans le mode de réalisation de la figure 5. Ces moyens d'intégration 47 adressent donc au dispositif de calcul 22 le signal de commande d'assiette θc, à travers l'additionneur 81. Les additionneurs 80 et 81 ne recevant alors aucun autre signal que ceux indiqués ci-dessus, ils n'interviennent pas dans la transmission desdits signaux θ̇c et θc, de sorte que le fonctionnement du transducteur 18 de la figure 8 est, dans ce cas, identique au fonctionnement du transducteur 18 de la figure 5.

En revanche, si au moins l'un des signaux λ et NZ + kq.q est supérieur ou égal à la valeur de consigne correspondante λ prot ou NZprot, le signal λ est adressé à la table 79 et celle-ci adresse à l'additionneur 80 une valeur de facteur de charge vertical commandé NZac. De plus, la table 87 adresse audit additionneur 80 une valeur de correction de facteur de charge vertical NZcor, de sorte que le signal à la sortie de l'additionneur 80 est alors NZac - NZcor. Ce dernier signal traverse les moyens d'intégration 47 à travers le filtre 50 et, dans l'additionneur 81, il lui est ajouté ou soustrait un signal de compensation NZcont. Ainsi, à la sortie du dispositif 18 de la figure 8, apparaît alors un signal de facteur de charge vertical commandée NZc égal à NZac - NZcor + NZcont.

Le signal de compensation NZcont a pour objet d'assurer le passage sans à-coup sur les gouvernes de profondeur 12 de la commande en θc a la commande en NZac-NZcor et vice-versa. La continuité entre le pilotage normal en θ̇c et le pilotage en protection de facteur de charge vertical est donc assurée par ledit signal de compensation NZcont.

On voit ainsi que, si pour le confort des passagers de l'avion 1, on désire limiter le facteur de charge vertical NZ à une valeur maximale NZmax (par exemple égale à 2g), grâce au terme d'avance de phase kq.q, il est possible d'anticiper le processus de protection (passage du commutateur 75 de la position 75a à la position 75b) et de déclencher cette protection pour une valeur de facteur de charge vertical égal à NZprot, inférieure à NZmax (par exemple NZprot est égale à 1,8 g). Par ailleurs, λ prot peut correspondre à un basculement du manche 14 égal à 12°.

Là encore, comme mentionné ci-dessus pour les systèmes des figures 6 et 7, on voit que le signal θ̇c provenant de la mémoire 41 pourrait ne pas transiter par l'additionneur 80, mais être adressé directement à l'entrée 42 des moyens d'intégration 47.

Par ailleurs, le système de la figure 8 comporte une autre table 89 recevant le signal NZac engendré par la table 79. La table 89 contient un modèle du facteur de charge désiré pour l'avion 1 et elle délivre une valeur de ce modèle pour chaque valeur du signal NZac qu'il reçoit. Elle adresse cette valeur du modèle à l'entrée négative d'un intégrateur 88, dont l'entrée positive reçoit le signal NZ des accélérateurs 83.

La différence intégrée par l'intégrateur 88, multipliée par un gain adéquat dans l'amplificateur 90, est adressée à une entrée positive de l'additionneur 80, pour être ajoutée au signal NZac ou à la différence NZac - NZcor. Ainsi, grâce au terme intégral engendré par l'intégrateur 88, on est sûr que le facteur de charge réel NZ sera égal au facteur de charge commandé NZac - NZcor.

Il va de soi que, dans le système de commande conforme à l'invention, on peut prévoir simultanément les trois protections en assiette, en incidence et en facteur de charge décrites séparément en regard des figures 6,7 et 8.

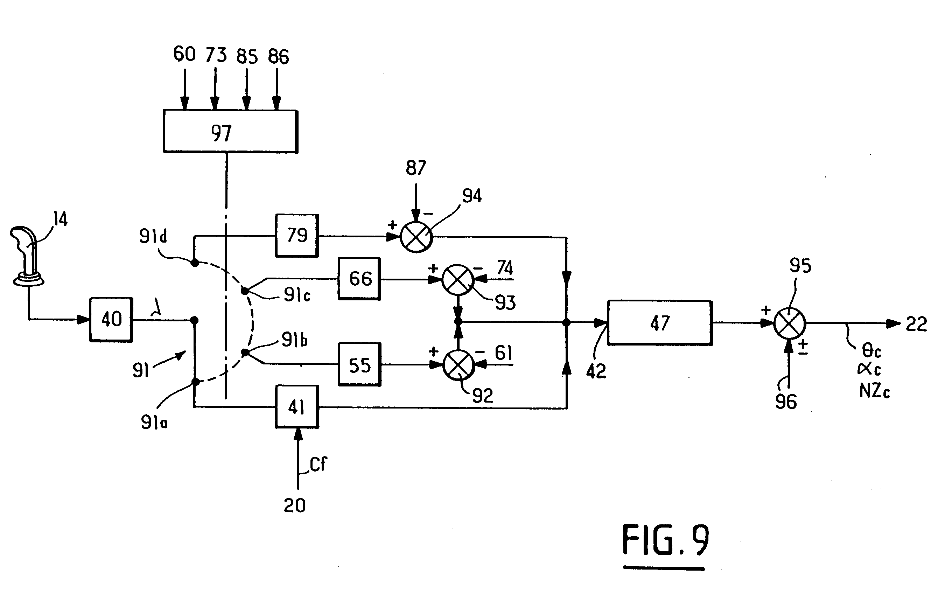

Sur la figure 9, on a représenté les moyens pour combiner ces trois protections, en ne montrant que les dispositifs nécessaires à la compréhension.

A cet effet, les commutateurs 51, 62 et 75 sont remplacés par un commutateur unique 91, à quatre positions 91a, 91b, 91c et 91d. La mémoire 41 est, d'un côté, reliée à la position 91a du commutateur 91 et de l'autre directement à l'entrée 42 des moyens d'intégration 47. La table 55 est reliée, d'un côté, à la position 91b du commutateur 91 et de l'autre à un additionneur 92 recevant le signal θcor de la table 61 et remplaçant l'additionneur 56. La table 66 est reliée, d'un côté, à la position 91c du commutateur 91 et de l'autre à un additionneur 93 recevant le signal αcor de la table 74 et remplaçant l'additionneur 67. Enfin, la table 79 est reliée, d'un côté, à la position 91d du commutateur 94 et de l'autre à un additionneur 94 recevant le signal NZcor de la table 87 et remplaçant l'additionneur 80.

De plus, les moyens de commande 52, 63 et 76 sont remplacés par des moyens de commande 97, recevant les quatre différences engendrées par les quatre comparateurs 60, 73, 85 et 86.

Ces moyens de commande sont tels que :

- si lesdites quatre différences sont positives, le commutateur 91 occupe la position 91a, de sorte que c'est la mémoire 41 qui reçoit le signal λ du dispositif 40 et qui adresse son signal θc aux moyens d'intégration 47 ;
- si une seule des différences provenant des comparateurs 60 et 73 ou si au moins une des différences provenant des comparateurs 85 et 86 est négative ou nulle, le commutateur 91 occupe la position 91b, 91c ou 91d correspondante, de sorte que c'est la table 55, 66 ou 79 correspondante qui reçoit le signal λ du dispositif 40 et qui adresse le signal θac - θcor, αac - cor ou NZac-NZcor aux moyens d'intégration 47 ;
- si plusieurs desdites différences ou toutes lesdites différences sont négatives ou nulles, le commutateur 91, suivant une loi de priorité préétablie, est commandé par lesdits moyens de commande 97 pour prendre la position 91b, 91c ou 91d prioritaire.

A la sortie des moyens d'intégration 47 est disposé un additionneur 95, susceptible d'ajouter au signal émis par ceux-ci, un signal de compensation appliqué sur son entrée 96 et destiné à établir la continuité de commande lors des basculements du commutateur 91.

**Revendications**

1. Système de commande en profondeur et en poussée pour un aéronef (1) comportant :
   - des premières surfaces aérodynamiques de profondeur (5,12) actionnées à partir d'un premier organe d'actionnement (14) associé à un premier transducteur (18) délivrant un premier signal électrique représentatif de l'assiette commandée (θc) ;
   - au moins un moteur (6) commandé à partir d'un second organe d'actionnement (15) associé à un second transducteur (19) délivrant un second signal électrique représentatif d'une vitesse commandée (Vcc) pour ledit aéronef ;
   - une pluralité de secondes surfaces aérodynamiques (7,8,9,10), dont certaines peuvent prendre, en fonction de chaque phase de vol de l'aéronef, des positions déterminées différentes définissant des configurations aérodynamiques particulières, le choix de l'une ou l'autre desdites configurations aérodynamiques étant obtenu grâce à l'actionnement d'un troisième organe d'actionnement (16) associé à un troisième transducteur (20) délivrant un troisième signal électrique représentatif de la configuration (Cf) choisie ;
- des moyens (17A) susceptibles de délivrer un quatrième signal électrique représentatif de la masse (M) dudit aéronef (1) ;
- des moyens (17B) susceptibles de délivrer un cinquième signal électrique représentatif de la distance (d), le long de l'axe longitudinal (R-R) dudit aéronef, séparant le centre de gravité (G) dudit aéronef d'une origine (0) ; et
- des moyens (21) susceptibles de délivrer des sixième, septième, huitième, neuvième et dixième signaux électriques, respectivement représentatifs de l'altitude de vol (Z), de l'incidence aérodynamique (α), de la vitesse de tangage (q), de l'assiette longitudinale (θ) et de la vitesse (Vc) instantanée dudit aéronef, ledit système comportant :
- un premier dispositif de calcul (22) recevant lesdits premier à sixième signaux électriques, ainsi que ledit dixième signal électrique et élaborant une première et une seconde combinaison linéaire (Aθc + BVcc ; Cθc + DVcc) desdits premier (θc) et second (Vcc) signaux électriques, les coefficients (A,B et C,D) attribués respectivement auxdits premier et second signaux électriques dans ladite première et ladite seconde combinaison linéaire dépendant desdits troisième à sixième et dixième signaux électriques ;
- un second dispositif de calcul (24) recevant lesdits troisième à dixième signaux électriques et élaborant une troisième et une quatrième combinaison linéaire (aα + bq + cθ + dVc ; eα + fq + gθ + hVc) desdits septième à dixième signaux électriques, les coefficients (a,b,c,d ; e,f,g,h) attribués respectivement auxdits septième à dixième signaux électriques dans ladite troisième et ladite quatrième combinaison linéaire dépendant desdits troisième à sixième et dixième signaux électriques ;
- des premiers moyens additionneurs (23) recevant lesdites première et troisième combinaisons linéaires et les additionnant pour former un premier ordre électrique de commande en profondeur (δq) adressé auxdites premières surfaces aérodynamiques (5,12) ; et

- des seconds moyens additionneurs (25) recevant lesdites seconde et quatrième combinaisons linéaires et les additionnant pour former un second ordre électrique de commande en poussée ($\delta\pi$) adressé audit moteur (6), caractérisé en ce que ledit premier transducteur (18) comporte :
- des moyens (40) pour engendrer un onzième signal électrique ($\lambda$) représentatif de la position dudit premier organe d'actionnement (14) par rapport à une position neutre ;
- une mémoire (41) recevant ledit onzième signal électrique ($\lambda$) et lui faisant correspondre un douzième signal électrique ($\dot{\theta}c$) représentatif d'une vitesse de tangage commandée ; et
- des moyens d'intégration (43,47) recevant ledit douzième signal électrique et l'intégrant pour engendrer ledit premier signal électrique représentatif de l'assiette commandée ($\theta c$).

2. Système selon la revendication 1, caractérisé en ce que ladite mémoire (41) comporte autant de premières tables de correspondance entre les onzième et douzième signaux électriques que de configurations aérodynamiques différentes, et en ce que ladite mémoire (41) reçoit, dudit troisième transducteur (20), ledit troisième signal électrique représentatif de ladite configuration (Cf) choisie, de sorte que, à chaque instant, ledit douzième signal électrique ($\dot{\theta}c$) correspond à la configuration actuelle.

3. Système selon la revendication 1, caractérisé en ce que lesdits moyens d'intégration (43) comportent un intégrateur (44), un amplificateur (45), et des troisièmes moyens additionneurs (46), ledit intégrateur et ledit amplificateur recevant ledit douzième signal électrique et délivrant leurs signaux de sortie auxdits troisièmes moyens additionneurs, qui délivrent ledit premier signal électrique.

4. Système selon la revendication 1, dans lequel la fonction de transfert entre l'assiette réelle de l'aéronef et ledit premier signal est du type $1/1 + k1.p + k2.p^2$, p étant la variable de la transformation de Laplace et k1 et k2 étant des constantes, caractérisé en ce que lesdits moyens d'intégration (47) comportent :
- un intégrateur (44), dont l'entrée est reliée à une borne (42) recevant ledit douzième signal électrique ;
- un amplificateur (45) dont l'entrée est reliée à ladite borne (42) recevant ledit douzième signal électrique, ledit amplificateur ayant un gain égal à k1 ;
- des troisièmes moyens additionneurs (46) recevant les signaux de sortie dudit intégrateur et dudit amplificateur ;
- un premier filtre (48) de fonction $1/1 + \tau p$ ($\tau$ étant une constante de temps) recevant le signal de sortie desdits troisièmes moyens additionneurs (46) ;
- un second filtre (50) de fonction $k2.p/1 + \tau p$, dont l'entrée est reliée à ladite borne (42) recevant ledit douzième signal électrique ; et
- des quatrièmes moyens additionneurs (49) qui reçoivent les signaux de sortie desdits premier et second filtres et qui délivrent ledit premier signal électrique.

5. Système selon la revendication 4, caractérisé en ce qu'il comporte :
- un premier commutateur (51), disposé entre lesdits moyens (40) engendrant ledit onzième signal électrique ($\lambda$) et ladite mémoire (41) engendrant ledit douzième signal électrique ($\dot{\theta}c$), ledit premier commutateur reliant lesdits moyens (40) et ladite mémoire (41) pour la première de ses positions (51a) ;
- une deuxième table (55), disposée en parallèle sur ladite mémoire (41) et susceptible de faire correspondre audit onzième signal électrique ($\lambda$) un treizième signal électrique représentatif d'une assiette commandée ($\theta ac$), ledit premier commutateur reliant lesdits moyens (40) engendrant ledit onzième signal électrique à ladite deuxième table (55) pour la seconde de ses positions (51b) ;
- des premiers moyens (52) de commande dudit premier commutateur ;
- des premiers moyens de comparaison (60) comparant ledit neuvième signal électrique représentatif de l'assiette longitudinale ($\theta$) à une valeur de consigne de protection d'assiette ($\theta prot$), lesdits premiers moyens de comparaison (60) contrôlant lesdits premiers moyens de commande (52), de façon que ledit premier commutateur (51) prenne respectivement sa première (51a) ou sa seconde (51b) position suivant qu'une première différence ($\theta-\theta$ prot) entre ledit neuvième signal et ladite valeur de consigne de protection d'assiette est positive, d'une part, ou négative ou nulle, d'autre part ;
- une troisième table (61) susceptible de faire correspondre audit neuvième signal représentatif de l'assiette longitudinale ($\theta$) un quatorzième signal électrique représentatif d'une correction d'assiette ($\theta cor$) ;

- des moyens (56) pour former une seconde différence ($\theta$ac - $\theta$cor) entre lesdits treizième et quatorzième signaux électriques ; et
- des moyens (56) pour transmettre, auxdits moyens d'intégration (47), ledit douzième signal électrique ($\dot{\theta}$c) lorsque ledit premier commutateur (51) est dans sa première position (51a), ou ladite seconde différence ($\theta$ac - $\theta$cor) lorsque ledit premier commutateur (51) est dans sa seconde position (51b).

6. Système selon la revendication 5,
   caractérisé en ce qu'il comporte des moyens (58,59) pour ajouter audit neuvième signal représentatif de l'assiette longitudinale ($\theta$), avant d'être appliqué auxdits premiers moyens de comparaison (60) et à ladite troisième table (61), un terme d'avance de phase ($\tau$.q) proportionnel audit huitième signal électrique représentatif de la vitesse de tangage (q).

7. Système selon la revendication 6,
   caractérisé en ce que ledit terme d'avance de phase est égal au produit dudit huitième signal électrique par la constante de temps desdits premier et second filtres (48 et 50).

8. Système selon l'une des revendications 5 à 7,
   caractérisé en ce qu'il comporte des moyens (57) pour corriger ledit premier signal électrique ($\theta$c) à chaque basculement dudit premier commutateur (51), afin d'assurer la continuité des ordres adressés auxdites premières surfaces aérodynamiques de profondeur (5,12), malgré ledit basculement.

9. Système selon la revendication 4,
   caractérisé en ce qu'il comporte :
   - un deuxième commutateur (62), disposé entre lesdits moyens (40) engendrant ledit onzième signal électrique ($\lambda$) et ladite mémoire (41) engendrant ledit douzième signal électrique ($\dot{\theta}$c), ledit deuxième commutateur reliant lesdits moyens (40) et ladite mémoire (41) pour la première de ses positions (62a) ;
   - une quatrième table (66), disposée en parallèle sur ladite mémoire (41) et susceptible de faire correspondre audit onzième signal électrique ($\lambda$) un quinzième signal électrique représentatif d'une incidence commandée ($\alpha$ac), ledit deuxième commutateur reliant lesdits moyens (40) engendrant ledit onzième signal électrique à ladite quatrième table (66) pour la seconde de ses positions (62b) ;
   - des deuxièmes moyens (63) de commande dudit deuxième commutateur ;
   - des deuxièmes moyens de comparaison (73) comparant ledit septième signal représentatif de l'incidence ($\alpha$) à une valeur de consigne de protection d'incidence ($\alpha$ prot), lesdits deuxièmes moyens de comparaison (73) contrôlant lesdits deuxièmes moyens de commande (63) de façon que ledit deuxième commutateur (62) prenne respectivement sa première (62a) ou sa seconde (62b) position suivant qu'une troisième différence ($\alpha$ - $\alpha$ prot) entre ledit septième signal et ladite valeur de consigne de protection d'incidence est positive, d'une part, ou négative ou nulle, d'autre part ;
   - une cinquième table (74) susceptible de faire correspondre audit septième signal représentatif de l'incidence ($\alpha$) un seizième signal représentatif d'une correction d'incidence ($\alpha$cor) ;
   - des moyens (67) pour former une quatrième différence ($\alpha$ac - $\alpha$cor) entre lesdits quinzième et seizième signaux ; et
   - des moyens (67) pour transmettre, auxdits moyens d'intégration (47), ledit douzième signal électrique ($\theta$c) lorsque ledit deuxième commutateur (62) est dans sa première position (62a), ou ladite quatrième différence ($\alpha$ac - $\alpha$cor) lorsque ledit deuxième commutateur (62) est dans sa seconde position (62b).

10. Système selon la revendication 9,
    caractérisé en ce qu'il comporte des moyens (69 à 72) pour ajouter audit septième signal représentatif de l'incidence ($\alpha$), avant d'être appliqué auxdits deuxièmes moyens de comparaison (73) et à ladite cinquième table (74), des termes d'avance de phase, respectivement proportionnels audit huitième signal électrique représentatif de la vitesse de tangage (q) et à la dérivée temporelle ($\dot{V}$) dudit dixième signal électrique représentatif de la vitesse (Vc) dudit aéronef.

11. Système selon l'une des revendications 9 ou 10,
    caractérisé en ce qu'il comporte des moyens (68) pour corriger ledit signal à la sortie desdits moyens d'intégration (47) à chaque basculement dudit deuxième commutateur (62), afin d'assurer la continuité des ordres adressés auxdites premières surfaces aérodynamiques de profondeur (5,12), malgré ledit basculement.

12. Système selon la revendication 4,
    caractérisé en ce qu'il comporte :
    - un troisième commutateur (75), disposé entre lesdits moyens (40) engendrant ledit onzième signal électrique ($\lambda$) et ladite mémoi-

re (41) engendrant ledit douzième signal électrique ($\hat{\theta}$c), ledit troisième commutateur reliant lesdits moyens (40) et ladite mémoire (41) pour la première de ses positions (75a) ;

- une sixième table (79), disposée en parallèle sur ladite mémoire (41) et susceptible de faire correspondre audit onzième signal électrique ($\lambda$) un dix-septième signal électrique (NZac) représentatif d'un facteur de charge vertical commandé, ledit troisième commutateur reliant lesdits moyens (40) engendrant ledit onzième signal électrique à ladite sixième table pour la seconde de ses positions (75b) ;

- des troisièmes moyens (76) de commande dudit troisième commutateur ;

- des troisièmes moyens de comparaison (85) comparant un dix-huitième signal électrique représentatif du facteur de charge vertical actuel (NZ) de l'aéronef à une valeur de consigne de protection en facteur de charge vertical (NZ prot), lesdits troisièmes moyens de comparaison contrôlant lesdits troisièmes moyens de commande, de façon que ledit troisième commutateur prenne respectivement sa première ou sa seconde position suivant qu'une cinquième différence (NZ - NZprot) entre ledit dix-huitième signal et ladite valeur de consigne de protection de facteur de charge vertical est positive d'une part, ou négative ou nulle d'autre part ;

- des quatrièmes moyens de comparaison (86) comparant ledit onzième signal électrique ($\lambda$) à une valeur de consigne ($\lambda$prot) de protection en déplacement dudit premier organe d'actionnement, lesdits quatrièmes moyens de comparaison contrôlant lesdits troisièmes moyens de commande, de façon que ledit troisième commutateur prenne respectivement sa première ou sa seconde position suivant qu'une sixième différence ($\lambda$ - $\lambda$prot) entre ledit onzième signal et ladite valeur de consigne de protection en déplacement dudit premier organe d'actionnement est positive, d'une part, ou négative ou nulle, d'autre part ;

- lesdits troisièmes moyens de commande imposant ladite première position audit troisième commutateur seulement si lesdites cinquième et sixième différences sont simultanément positives ;

- une septième table (87) susceptible de faire correspondre audit dix-huitième signal représentatif du facteur de charge vertical actuel (NZ) un dix-neuvième signal (NZcor) représentatif d'une correction de facteur de charge vertical ;

- des moyens (80) pour former une septième différence (NZac - NZcor) entre lesdits dix-septième et dix-neuvième signaux ; et

- des moyens (80) pour transmettre auxdits moyens d'intégration (47), ledit douzième signal électrique lorsque ledit troisième commutateur est dans sa première position, ou ladite septième différence lorsque ledit troisième commutateur est dans sa seconde position.

13. Système selon la revendication 12, caractérisé en ce qu'il comporte des moyens pour ajouter audit dix-huitième signal représentatif du facteur de charge vertical actuel, avant d'être appliqué auxdits troisièmes moyens de comparaison et à ladite septième table, un terme d'avance de phase proportionnel audit huitième signal électrique représentatif de la vitesse de tangage.

14. Système selon l'une des revendications 12 ou 13, caractérisé en ce qu'il comporte des moyens (81) pour corriger le signal à la sortie desdits moyens d'intégration à chaque basculement dudit troisième commutateur, afin d'assurer la continuité des ordres adressés auxdites premières surfaces aérodynamiques de profondeur, malgré ledit basculement.

15. Système selon l'une des revendications 12 à 14, caractérisé en ce qu'il comporte :

- une huitième table (89) recevant ledit dix-septième signal (NZac) et faisant correspondre à celui-ci un vingtième signal électrique représentatif d'un modèle désiré pour ledit facteur de charge vertical ;

- des moyens (88) pour former et intégrer la différence entre ledit dix-huitième signal électrique (NZ) représentatif du facteur de charge vertical actuel et ledit vingtième signal électrique ; et

- des moyens (80) pour additionner ladite différence intégrée à ladite septième différence (NZac-NZcor).

16. Système selon les revendications 5,9 et 12, caractérisé en ce qu'il comporte :

- à la place desdits premier, deuxième et troisième commutateurs, un quatrième commutateur à quatre positions qui relie lesdits moyens engendrant le onzième signal électrique respectivement à ladite mémoire, à ladite deuxième table, à ladite quatrième table et à ladite sixième table pour ses première, deuxième, troisième et quatrième positions ; et

- à la place desdits premiers, deuxièmes et troisièmes moyens de commande, des quatrièmes moyens de commande commandant ledit quatrième commutateur, de façon que celui-ci occupe :
  . sa première position si lesdites première, troisième, cinquième et sixième différences sont positives ;
  . sa deuxième, troisième ou quatrième position respectivement, si la première, la troisième ou au moins l'une des cinquième ou sixième différences est nulle ou négative ; et
  . celle de ses deuxième, troisième ou quatrième position qui correspond à une priorité si au moins deux desdites première, troisième, cinquième et sixième différences sont nulles ou négatives.

**Patentansprüche**

1. Höhen- und Schubsteuersystem für ein Luftfahrzeug (1) mit:
   - ersten aerodynamischen Flächen zur Höhensteuerung (5,12), die durch ein erstes Betätigungsorgan (14) betätigt werden, das mit einem ersten Wandler (18) verbunden ist, der ein erstes, für die gesteuerte Trimmung ($\Theta$c) repräsentatives elektrisches Signal abgibt;
   - mindestens einem Motor (6), der durch ein zweites Betätigungsorgan (15) gesteuert wird, das mit einem zweiten Wandler (19) verbunden ist, der ein zweites, für eine gesteuerte Geschwindigkeit (Vcc) des Luftfahrzeugs repräsentatives elektrisches Signal abgibt;
   - einer Vielzahl zweiter aerodynamischer Flächen (7,8,9,10), von denen einige entsprechend jeder Flugphase des Luftfahrzeugs bestimmte unterschiedliche Stellungen einnehmen können, die besondere aerodynamische Konfigurationen darstellen, wobei die Wahl der einen oder anderen aerodynamischen Konfiguration durch Betätigung eines dritten Betätigungsorgans (16) erfolgt, das mit einem dritten Wandler (20) verbunden ist, der ein drittes, für die gewählte Konfiguration (Cf) repräsentatives elektrisches Signal abgibt;
   - Mitteln (17A), die ein viertes, für die Masse (M) des Luftfahrzeugs (1) repräsentatives elektrisches Signal abgeben können;
   - Mitteln (17B), die ein fünftes, für den Abstand (d) zwischen dem Schwerpunkt (G) des Luftfahrzeugs und einem Nullpunkt (O) entlang der Längsachse (R-R) des Luftfahrzeugs repräsentatives elektrisches Signal abgeben können; und
   - Mitteln (21), die ein sechstes, siebentes, achtes, neuntes und zehntes elektrisches Signal abgeben können, das jeweils für die Flughöhe (Z), den aerodynamischen Anstellwinkel ($\alpha$), die Nickgeschwindigkeit (q), den Trimmwinkel ($\Theta$) und die augenlickliche Geschwindigkeit (Vc) des Luftfahrzeugs repräsentativ ist, wobei das System umfaßt:
   - eine erste Rechenvorrichtung (22) für das erste bis sechste elektrische Signal sowie das zehnte elektrische Signal, die eine erste und eine zweite lineare Verknüpfung (A$\Theta$c + BVcc; C$\Theta$c + DVcc) des ersten ($\Theta$c) und zweiten (Vcc) elektrischen Signals herstellt, wobei die Koeffizienten (A,B und C,D), die dem ersten bzw. zweiten elektrischen Signal in der ersten und zweiten linearen Verknüpfung zugeordnet sind, vom dritten bis sechsten und zehnten elektrischen Signal abhängig sind;
   - eine zweite Rechenvorrichtung (24) für das dritte bis zehnte elektrische Signal, die eine dritte und eine vierte lineare Verknüpfung (a$\alpha$ + bq + c$\Theta$ + dVc; e$\alpha$ + fq + g$\Theta$ + hVc) des siebenten bis zehnten elektrischen Signals herstellt, wobei die Koeffizienten (a,b,c,d; e,f,g,h), die jeweils dem siebenten bis zehnten elektrischen Signal in der dritten und in der vierten linearen Verknüpfung zugeordnet sind, vom dritten bis sechsten und zehnten elektrischen Signal abhängig sind;
   - erste Addiermittel (23) für die erste und dritte lineare Verknüpfung zu deren Addition zwecks Bildung eines ersten elektrischen Höhensteuerbefehls ($\delta$q) für die ersten aerodynamischen Flächen (5,12); und
   - zweite Addiermittel (25) für die zweite und vierte lineare Verknüpfung zu deren Addition zwecks Bildung eines zweiten elektrischen Schubsteuerbefehls ($\delta\pi$) für den Motor (6), dadurch gekennzeichnet, daß der erste Wandler (18) umfaßt:
   - Mittel (40) zur Erzeugung eines elften elektrischen Signals ($\lambda$) das für die Stellung des ersten Betätigungsorgans (14) gegenüber einer Neutralstellung repräsentativ ist;
   - einen Speicher (41) für das elfte elektrische Signal ($\lambda$), der diesem ein zwölftes elektrisches Signal ($\dot{\Theta}$c) zuordnet, das für eine gesteuerte Nickgeschwindigkeit repräsentativ ist; und
   - Integrationsmittel (43,47) für das zwölfte elektrische Signal zu dessen Integration zwecks Erzeugung des ersten für die gesteuerte Trimmung ($\Theta$c) repräsentativen

elektrischen Signals.

2.  System nach Anspuch 1,
    dadurch gekennzeichnet, daß der Speicher (41) ebensoviele erste Zuordnungstabellen für das elfte und zwölfte elektrische Signal wie unterschiedliche aerodynamische Konfigurationen hat, und dadurch, daß an den Speicher (41) vom dritten Wandler (20) das dritte für die gewählte Konfiguration (Cf) repräsentative elektrische Signal gelangt, so daß das zwölfte elektrische Signal ($\dot{\Theta}c$) jederzeit der gegenwärtigen Konfiguration entspricht.

3.  System nach Anspruch 1,
    dadurch gekennzeichnet, daß die Integrationsmittel (43) einen Integrator (44), einen Verstärker (45) und dritte Addiermittel (46) haben, wobei an den Integrator und den Verstärker das zwölfte elektrische Signal gelangt und diese ihre Ausgangssignale an die dritten Addiermittel abgeben, die das erste elektrische Signal abgeben.

4.  System nach Anspruch 1, bei dem die Übertragungsfunktion zwischen der tatsächlichen Trimmung des Luftfahrzeugs und dem ersten Signal vom Typ $1/1 + k1.p + k2.p^2$ ist, wobei p die Variable der Laplaceschen Transformation und k1 und k2 Konstante sind,
    dadurch gekennzeichnet, daß die Integrationsmittel (47) umfassen:
    -   einen Integrator (44), dessen Eingang mit einer Klemme (42) für das zwölfte elektrische Singal verbunden ist;
    -   einen Verstärker (45), dessen Eingang mit der Klemme (42) für das zwölfte elektrische Signal verbunden ist, wobei der Verstärker eine Verstärkung gleich k1 hat;
    -   dritte Addiermittel (46) für die Ausgangssignale des Integrators und des Verstärkers;
    -   einen ersten Filter (48) mit der Funktion $1/1 + \tau p$ (mit $\tau$ als Zeitkonstante) für das Ausgangssignal der dritten Addiermittel (46);
    -   einen zweiten Filter (50) mit der Funktion $k2.p/1 + \tau p$, dessen Eingang mit der Klemme (42) für das zwölfte elektrische Signal verbunden ist; und
    -   vierte Addiermittel (49) für die Ausgangssignale des ersten und zweiten Filters, die das erste elektrische Signal abgeben.

5.  System nach Anspruch 4,
    dadurch gekennzeichnet, daß es umfaßt:
    -   einen ersten Schalter (51) zwischen den Mitteln (40) zur Erzeugung des elften elektrischen Signals ($\lambda$) und dem Speicher (41) zur Erzeugung des zwölften elektrischen Signals ($\dot{\Theta}c$), wobei der erste Schalter die Mittel (40) und den Speicher (41) miteinander verbindet, wenn er sich in seiner ersten Schalterstellung (51a) befindet;
-   eine zweite Tabelle (55) parallel zu Speicher (41), die dem elften elektrischen Signal ($\lambda$) ein dreizehntes elektrisches Signal zuordnen kann, das für eine gesteuerte Trimmung ($\Theta ac$) repräsentativ ist, wobei der erste Schalter die Mittel (40) zur Erzeugung des elften elektrischen Signals mit der zweiten Tabelle (55) verbindet, wenn er sich in seiner zweiten Schalterstellung (51b) befindet;
-   erste Mittel (52) zur Steuerung des ersten Schalters;
-   erste Vergleichsmittel (60) zum Vergleich des neunten elektrischen Signals, das für den Trimmwinkel ($\Theta$) repräsentativ ist, mit einem Trimmschutzsollwert ($\Theta prot$), wobei die ersten Vergleichsmittel (60) die ersten Steuermittel (52) so regeln, daß der erste Schalter (51) seine erste (51a) bzw. zweite (51b) Schalterstellung einnimmt, je nachdem ob eine erste Differenz ($\Theta - \Theta prot$) zwischen dem neunten Signal und dem Trimmschutzsollwert einerseits positiv oder andererseits negativ oder Null ist;
-   eine dritte Tabelle (61), die dem neunten Signal, das für den Trimmwinkel ($\Theta$) repräsentativ ist, ein vierzehntes elektrisches Signal zuordnen kann, das für eine Trimmkorrektur ($\Theta cor$) repräsentativ ist;
-   Mittel (56) zur Bildung einer zweiten Differenz ($\Theta ac - \Theta cor$) zwischen dem dreizehnten und vierzehnten elektrischen Signal; und
-   Mittel (56) zur Übertragung des zwölften elektrischen Signals ($\dot{\Theta}c$), wenn sich der erste Schalter (51) in seiner ersten Schalterstellung (51a) befindet, oder der zweiten Differenz ($\Theta ac - \Theta cor$), wenn sich der erste Schalter (51) in seiner zweiten Schalterstellung (51b) befindet, an die Integrationsmittel (47).

6.  System nach Anspruch 5,
    dadurch gekennzeichnet, daß es Mittel (58,59) hat, um dem neunten Signal, das für den Trimmwinkel ($\Theta$) repräsentativ ist, bevor es an die ersten Vergleichsmittel (60) und die dritte Tabelle (61) angelegt wird, ein Phasenvorlaufglied ($\tau.q$) hinzuzufügen, das dem achten elektrischen Signal proportional ist, welches für die Nickgeschwindigkeit (q) repräsentativ ist.

7.  System nach Anspruch 6,
    dadurch gekennzeichnet, daß das Phasenvorlaufglied gleich dem Produkt des achten elektrischen Signals und der Zeitkonstante des ersten und zweiten Filters (48 und 50) ist.

8. System nach einem der Ansprüche 5 bis 7, dadurch gekennzeichnet, daß es Mittel (57) hat, um das erste elektrische Signal (Θc) bei jeder Umschaltung des ersten Schalters (51) zu korrigieren, damit trotz der Umschaltung die Kontinuität der Befehle für die ersten aerodynamischen Höhenflächen (5,12) gewahrt wird.

9. System nach Anspruch 4, dadurch gekennzeichnet, daß es umfaßt:
   - einen zweiten Schalter (62) zwischen den Mitteln (40) zur Erzeugung des elften elektrischen Signals (λ) und Speicher (41) zur Erzeugung des zwölften elektrischen Signals (Θ̇c), wobei der zweite Schalter Mittel (40) und Speicher (41) miteinander verbindet, wenn er sich in seiner ersten Schalterstellung (62a) befindet;
   - eine vierte Tabelle (66) parallel zum Speicher (41), die dem elften elektrischen Signal (λ) ein fünfzehntes elektrisches Signal zuordnen kann, das für einen gesteuerten Anstellwinkel (αac) repräsentativ ist, wobei der zweite Schalter die Mittel (40) zur Erzeugung des elften elektrischen Signals mit der vierten Tabelle (66) verbindet, wenn er sich in seiner zweiten Schalterstellung (62b) befindet;
   - zweite Mittel (63) zur Steuerung des zweiten Schalters;
   - zweite Vergleichsmittel (73) zum Vergleich des siebenten, für den Anstellwinkel (α) repräsentativen Signals mit einem Sollwert des Anstellwinkelschutzes (αprot), wobei die zweiten Vergleichsmittel (73) die zweiten Steuermittel (63) so regeln, daß der zweite Schalter (62) seine erste (62a) bzw. zweite (62b) Schalterstellung einnimmt, je nachdem ob eine dritte Differenz (α - αprot) zwischen dem siebenten Signal und dem Sollwert des Anstellwinkelschutzes einerseits positiv oder andererseits negativ oder Null ist;
   - eine fünfte Tabelle (74), die dem siebenten, für den Anstellwinkel (α) repräsentativen Signal ein sechzehntes Signal zuordnen kann, das für eine Anstellwinkelkorrektur (αcor) repräsentativ ist;
   - Mittel (67) zur Bildung einer vierten Differenz (αac - αcor) zwischen dem fünfzehnten und sechzehnten Signal; und
   - Mittel (67) zur Übertragung des zwölften elektrischen Signals (Θ̇c), wenn sich der zweite Schalter (62) in seiner ersten Schalterstellung (62a) befindet, oder der vierten Differenz (αac - αcor), wenn sich der zweite Schalter (62) in seiner zweiten Schalterstellung (62b) befindet, an die Integrationsmittel (47).

10. System nach Anspruch 9, dadurch gekennzeichnet, daß es Mittel (69 bis 72) hat, um zum siebenten, für den Anstellwinkel (α) repräsentativen Signal, bevor es an die zweiten Vergleichsmittel (73) und an die fünfte Tabelle (74) angelegt wird, Phasenvorlaufglieder zu addieren, die dem achten, für die Nickgeschwindigkeit (q) repräsentativen elektrischen Signal bzw. der zeitlichen Ableitung (V̇) des zehnten, für die Geschwindigkeit (Vc) des Luftfahrzeugs repräsentativen elektrischen Signals proportional sind.

11. System nach einem der Ansprüche 9 oder 10, dadurch gekennzeichnet, daß es Mittel (68) hat, um das Signal am Ausgang der Integrationsmittel (47) bei jeder Umschaltung des zweiten Schalters (62) zu korrigieren, damit die Kontinuität der Befehle für die ersten aerodynamischen Höhenflächen (5,12) trotz der Umschaltung gewährleistet ist.

12. System nach Anspruch 4, dadurch gekennzeichnet, daß es umfaßt:
   - einen dritten Schalter (75) zwischen den Mitteln (40) zur Erzeugung des elften elektrischen Signals (λ) und dem Speicher (41) zur Erzeugung des zwölften elektrischen Signals (Θ̇c), wobei der dritte Schalter Mittel (40) und Speicher (41) in seiner ersten Schalterstellung (75a) miteinander verbindet;
   - eine sechste Tabelle (79) parallel zu Speicher (41), die dem elften elektrischen Signal (λ) ein siebzehntes elektrisches Signal (NZac) zuordnen kann, das für ein gesteuertes vertikales Lastvielfaches repräsentativ ist, wobei der dritte Schalter die Mittel (40) zur Erzeugung des elften elektrischen Signals mit der sechsten Tabelle in seiner zweiten Schalterstellung (75b) verbindet;
   - dritte Mittel (76) zur Steuerung des dritten Schalters;
   - dritte Vergleichsmittel (85) zum Vergleich eines achtzehnten elektrischen Signals, das für das gegenwärtige vertikale Lastvielfache (NZ) des Luftfahrzeugs repräsentativ ist, mit einem Sollwert des vertikalen Lastvielfachenschutzes (NZprot), wobei die dritten Vergleichsmittel die dritten Steuermittel so regeln, daß der dritte Schalter seine erste bzw. seine zweite Schalterstellung einnimmt, je nachdem ob eine fünfte Differenz (NZ - NZprot) zwischen dem achtzehnten Signal und dem Sollwert des vertikalen Lastvielfachenschutzes einerseits positiv oder andererseits negativ oder Null ist;

- vierte Vergleichsmittel (86) zum Vergleich des elften elektrischen Signals ($\lambda$) mit einem Sollwert ($\lambda$prot) des Schutzes bei Bewegung des ersten Betätigungsorgans, wobei die vierten Vergleichsmittel die dritten Steuermittel so regeln, daß der dritte Schalter seine erste bzw. zweite Stellung einnimmt, je nachdem ob eine sechste Differenz ($\lambda$ - $\lambda$prot) zwischen dem elften Signal und dem Sollwert des Schutzes bei Bewegung des ersten Betätigungsorgans einerseits positiv oder andererseits negativ oder Null ist;

- dabei weisen die dritten Steuermittel dem dritten Schalter die erste Schalterstellung nur zu, wenn die fünfte und sechste Differenz gleichzeitig positiv sind;

- eine siebente Tabelle (87), die dem achtzehnten Signal, das für das gegenwärtige vertikale Lastvielfache (NZ) repräsentativ ist, ein neunzehntes Signal (NZcor) zuordnen kann, das für eine Korrektur des vertikalen Lastvielfachen repräsentativ ist;

- Mittel (80) zur Bildung einer siebenten Differenz (NZac - NZcor) zwischen dem siebzehnten und dem neunzehnten Signal; und

- Mittel (80) zur Übertragung des zwölften elektrischen Signals, wenn sich der dritte Schalter in seiner ersten Schalterstellung befindet, oder der siebenten Differenz, wenn sich der dritte Schalter in seiner zweiten Schalterstellung befindet, an die Integratgionsmittel (47).

13. System nach Anspruch 12,
dadurch gekennzeichnet, daß es Mittel hat, um zum achtzehnten Signal, das für das gegenwärtige vertikale Lastvielfache repräsentativ ist, bevor es den dritten Vergleichsmitteln und der siebenten Tabelle aufgegeben wird, ein Phasenvorlaufglied zu addieren, das dem achten elektrischen Signal, das für die Nickgeschwindigkeit repräsentativ ist, proportional ist.

14. System nach einem der Ansprüche 12 oder 13,
dadurch gekennzeichnet, daß es Mittel (81) hat, um das Signal am Ausgang der Integrationsmittel bei jeder Umschaltung des dritten Schalters zu korrigieren, damit die Kontinuität der Befehle für die ersten aerodynamischen Höhenflächen trotz der Umschaltung gewahrt bleibt.

15. System nach einem der Ansprüche 12 bis 14, dadurch gekennzeichnet, daß es umfaßt:

- eine achte Tabelle (89) für das siebzehnte Signal (NZac), die diesem ein zwanzigstes elektrisches Signal zuordnet, das für ein gewünschtes Modell des vertikalen Lastvielfachen repräsentativ ist;

- Mittel (88) zur Bildung und Integration der Differenz zwischen dem achtzehnten elektrischen Signal (NZ), das für das gegenwärtige vertikale Lastvielfache repräsentativ ist, und dem zwanzigsten elektrischen Signal; und

- Mittel (80), um die integrierte Differenz und die siebente Differenz (NZac - NZcor) zu addieren.

16. System nach den Ansprüchen 5,9 und 12, dadurch gekennzeichnet, daß es umfaßt:

- statt des ersten, zweiten und dritten Schalters einen vierten Schalter mit vier Schalterstellungen, der die Mittel zur Erzeugung des elften elektrischen Signals in seiner ersten, zweiten, dritten und vierten Schalterstellung jeweils mit dem Speicher, der zweiten Tabelle, der vierten Tabelle und der sechsten Tabelle verbindet; und

- statt der ersten, zweiten und dritten Steuermittel vierte Steuermittel zur Steuerung des vierten Schalters, so daß dieser folgende Stellungen einnimmt:

. seine erste Schalterstellung, wenn die erste, dritte, fünfte und sechste Differenz positiv sind;

. jeweils seine zweite, dritte oder vierte Schalterstellung, wenn die erste, dritte oder mindestens eine der fünften oder sechsten Differenz Null oder negativ sind; und

. diejenige seiner zweiten, dritten oder vierten Schalterstellung, die einer Priorität entspricht, wenn mindestens zwei der ersten, dritten, fünften und sechsten Differenz Null oder negativ sind.

## Claims

1. A pitch and thrust control system for an aircraft (1) the system comprising:

first airfoils for pitch control (5, 12) actuated from a first actuator member (14) associated with a first transducer (18) delivering a first electrical signal representative of the trim setting ($\theta$c);

at least one engine (6) controlled from a second actuator member (15) associated with a second transducer (19) delivering a second electrical signal representative of a speed setting (Vcc) for said aircraft;

a plurality of second airfoils (7, 8, 9, 10) capable of taking up different determined positions as a function of each stage of flight of the aircraft, defining particular aerodynamic configurations, with one or other of said aerodynamic configurations being selected by actuating a third actuator member (16) associated with a third transducer (20) delivering a third electrical signal representative of the selected configuration (Cf);

means (17A) suitable for delivering a fourth electrical signal representative of the mass (M) of said aircraft (1);

means (17B) suitable for delivering a fifth electrical signal representative of the distance (d) along the longitudinal axis (R-R) of said aircraft between the center of gravity (G) of said aircraft and an origin (O); and

means (21) suitable for delivering the sixth, seventh, eighth, ninth, and tenth electrical signals respectively representative of the instantaneous flight altitude (Z), aerodynamic angle of incidence ($\alpha$), pitch rate ($q$), longitudinal trim ($\theta$), and speed (Vc) of said aircraft;

said system including:

a first calculation device (22) receiving said first to sixth electrical signals, together with said tenth electrical signal and delivering first and second linear combinations (A$\theta$c + BVcc; C$\theta$c + DVcc) of said first and second electrical signals ($\theta$c; Vcc), with the coefficients (A, B and C, D) given to said first and second signals respectively in said first and second linear combinations depending on said third to sixth and tenth electrical signals;

a second calculation device (24) receiving said third to tenth electrical signals and generating third and fourth linear combinations (a$\alpha$ + bq + c$\theta$ + dVc; e$\alpha$ + fq + g$\theta$ + hVc) of said seventh to tenth electrical signals, the coefficients ($a$, $b$, $c$, $d$; $e$, $f$, $g$, and $h$) given to said seventh to tenth electrical signals respectively in said third and fourth linear combinations depending on said third to sixth and tenth electrical signals;

first adder means (23) receiving said first and third linear combinations and adding them to form a pitch first electrical command ($\delta$q) applied to said first airfoils (5, 12); and

second adder means (25) receiving said second and fourth linear combinations and adding them to form a thrust second electrical command ($\delta\pi$) applied to said engine (6);

the system being characterized in that said first transducer (18) comprises:

means (40) for generating an eleventh electrical signal ($\lambda$) representative of the position of said first actuator member (14) relative to a neutral position;

a memory (41) receiving said eleventh electrical signal ($\lambda$) and causing it to correspond to a twelfth electrical signal ($\theta$c') representative of a pitch rate setting; and

integration means (43, 47) receiving said twelfth electrical signal and integrating it to generate said first electrical signal representative of the trim setting ($\theta$c).

2. A system according to claim 1, characterized in that said memory (41) includes as many first correspondence tables between the eleventh and twelfth electrical signals as there are different aerodynamic configurations, and in that said memory (41) receives said third electrical signal representative of said selected configuration (Cf) from said third transducer (20) such that said twelfth electrical signal ($\theta$c') corresponds at all times to the current configuration.

3. A system according to claim 1, characterized in that said integration means (43) include an integrator (44), an amplifier (45), and third adder means (46), said integrator and said amplifier receiving said twelfth electrical signal and delivering their output signals to said third adder means which deliver said first electrical signal.

4. A system according to claim 1, in which the transfer function between the real trim of the aircraft and said first signal is of the type $1/(1 + k1.p + k2.p^2)$, where $p$ is the Laplace transform variable and k1 and k2 are constants, the system being characterized in that said integration means (47) include:

an integrator (44) whose input is connected to a terminal (42) receiving said twelfth electrical signal;

an amplifier (45) whose input is connected to said terminal (42) receiving said twelfth electrical signal, said amplifier having a gain equal to k1;

third adder means (46) receiving the output signals from said integrator and said amplifier;

a first filter (48) having the function $1/(1 + \tau p)$, where $\tau$ is a time constant, receiving the output signal from said third adder means (46);

a second filter (50) having the function $k2.p/(1 + \tau p)$, whose input is connected to said terminal (42) receiving said twelfth electrical signal; and

fourth adder means (49) receiving the output signals from said first and second filters and delivering said first electrical signal.

5. A system according to claim 4, characterized in that it includes:

a first switch (51) connected between said means (40) generating said eleventh electrical signal (λ) and said memory (41) generating said twelfth electrical signal (θc'), said first switch interconnecting said means (40) and said memory (41) when in a first position (51a);

a second table (55) connected in parallel with said memory (41) and suitable for causing said eleventh electrical signal (λ) to correspond to a thirteenth electrical signal representative of a trim setting (θac), said first switch interconnecting said means (40) generating said eleventh electrical signal and said second table (55) when in a second position (51b);

first control means (52) for controlling said first switch;

first comparator means (60) comparing said ninth electrical signal representative of the longitudinal trim (θ) with a trim protection reference value (θprot), said first comparator means (60) controlling said first control means (52) so that said first switch (51) takes up its first and second positions (51a, 51b), respectively, depending on whether a first difference (θ-θprot) between said ninth signal and said trim protection reference value is positive or else negative or zero;

a third table (61) for causing said ninth signal representative of the longitudinal trim (θ) to correspond to a fourteenth electrical signal representative of a trim correction (θcor);

means (56) for forming a second difference (θac - θcor) between said thirteenth and fourteenth electrical signals; and

means (56) for transmitting said twelfth electrical signal (θc') to said integration means (47) when said first switch (51) is in its first position (51a), or for transmitting said second difference (θac - θcor) to said integration means (47) when said first switch (51) is in its second position (51b).

6. A system according to claim 5, characterized in that it includes means (58, 59) for adding a phase advance term (τ.q) proportional to said eighth electrical signal representative of the pitch rate (q) to said ninth signal representative of the longitudinal trim (θ) prior to its being applied to said first comparator means (60) and to said third table (61).

7. A system according to claim 6, characterized in that said phase advance term is equal to the product of said eighth electrical signal multiplied by the time constant of said first and second filters (48 and 50).

8. A system according to any one of claims 5 to 7, characterized in that it includes means (57) for correcting said first electrical signal (θc) each time said first switch (51) switches, thereby ensuring continuity in the commands applied to said first airfoils for pitch control (5, 12) in spite of said switching.

9. A system according to claim 4, characterized in that it includes:

a second switch (62) connected between said means (40) generating said eleventh electrical signal (λ) and said memory (41) generating said twelfth electrical signal (θc'), said second switch interconnecting said means (40) and said memory (41) when in a first position (62a);

a fourth table (66) connected in parallel with said memory (41) and suitable for making said eleventh electrical signal (λ) correspond to a fifteenth electrical signal representative of an angle of incidence setting (αac), said second switch interconnecting said means (40) generating said eleventh electrical signal and said fourth table (66) when in a second position (62b);

second control means (63) for controlling said second switch;

second comparator means (73) comparing said seventh signal representative of the angle of incidence (α) with an angle of incidence protection reference value (αprot), said second comparator means (73) controlling said second control means (63) so that said second switch (62) takes up its first and second positions (62a, 62b) respectively depending on whether a third difference (α - αprot) between said second signal and said angle of incidence protection reference value is positive, or else is negative or zero;

a fifth table (74) suitable for making said seventh signal representative of the angle of incidence (α) correspond to a sixteenth signal representative of an angle of incidence correction (αcor);

means (67) for taking a fourth difference (αac - αacor) between said fifteenth and sixteenth signals; and

means (67) for transmitting said twelfth electrical signal (θc') to said integration means (47) when said second switch (62) is in its first position (62a), or for transmitting said fourth difference (αac - αcor) thereto when said second switch (62) is in its second position (62b).

10. A system according to claim 9, characterized in that it includes means (69 to 72) for adding phase advance terms respectively proportional to said eighth electrical signal representative of the pitch rate (q) and to the time derivative (V') of said tenth electrical signal representative of the speed (Vc) of said aircraft to said seventh signal representative of the angle of incidence ($\alpha$) prior to its being applied to said second comparator means (73) and to said fifth table (74).

11. A system according to claim 9 or 10, characterized in that it includes means (68) for correcting said signal at the output of said integration means (47) each time said second switch (62) switches, thereby ensuring continuity in the commands applied to said first airfoils for pitch control (5, 12) in spite of said switching.

12. A system according to claim 4, characterized in that it includes:

a third switch (75) disposed between said means (40) generating said eleventh electrical signal ($\lambda$) and said memory (41) generating said twelfth electrical signal ($\theta c'$), said third switch interconnecting said means (40) and said memory (41) when in a first position (75a);

a sixth table (79) connected in parallel with said memory (41) and suitable for causing said eleventh electrical signal ($\lambda$) to correspond to a seventeenth electrical signal (NZac) representative of a vertical load factor setting, said third switch interconnecting said means (40) generating said eleventh electrical signal and said sixth table when in a second position (75b);

third control means (76) controlling said third switch;

third comparator means (85) comparing an eighteenth electrical signal representative of the actual vertical load factor (NZ) of the aircraft with a reference value for vertical load factor protection (NZprot), said third comparator means controlling said third control means in such a manner that said third switch takes up its first or second position respectively depending on whether a fifth difference (NZ - NZprot) between said eighteenth signal and said vertical load factor protection reference is positive or else is negative or zero;

fourth comparator means (86) comparing said eleventh electrical signal ($\lambda$) to a reference value ($\lambda$prot) for protecting said first actuator member in displacement, said fourth comparator means controlling said third control means in such a manner that said third switch takes up its first position or its second position respectively depending on whether a sixth difference ($\lambda$ - $\lambda$prot) between said eleventh signal and said reference value for protecting said first control member in displacement is positive, or else is negative or zero;

said third control means imposing said first position on said third switch only if said fifth and sixth differences are simultaneously positive;

a seventh table (87) suitable for causing said eighteenth signal representative of the current vertical load factor (NZ) to correspond to a nineteenth signal (NZcor) representative of a vertical load factor correction;

means (80) for forming a seventh difference (NZac - NZcor) between said seventeenth and nineteenth signals; and

means (80) for transmitting said twelfth electrical signal to said integration means (47) when said third switch is in its first position, or for transmitting said seventh difference to said integration means (47) when said third switch is in its second position.

13. A system according to claim 12, characterized in that it includes means for adding a phase advance term proportional to said eighth electrical signal representative of the pitch rate to said eighteenth signal representative of the current vertical load factor prior to its being applied to said third comparator means and to said seventh table.

14. A system according to claim 12 or 13, characterized in that it includes means (81) for correcting the output signal from said integration means on each occasion said third switch switches, thereby ensuring continuity in the commands applied to said first airfoils for pitch control, in spite of said switching.

15. A system according to any one of claims 12 to 14, characterized in that it includes:

an eighth table (89) receiving said seventeenth signal (NZac) and causing it to correspond to a twentieth electrical signal representative of a desired model for said vertical load factor;

means (88) for forming the difference between said eighteenth electrical signal (NZ) representative of the current vertical load factor and said twentieth electrical signal and for integrating said difference; and

means (80) for adding the integrated difference to said seventh difference (NZac - NZcor).

16. A system according to claims 5, 9, and 12, characterized in that it includes:

a four-position fourth switch replacing said first, second, and third switches, said fourth switch connecting said means that generate the eleventh electrical signal respectively to said memory, to said second table, to said fourth table, and to said sixth table when it is in its first position, its second position, its third position, and its fourth position; and

fourth control means replacing said first, second, and third control means, and controlling said fourth switch in such a manner that it occupies:

its first position if said first, third, fifth, and sixth differences are all positive;

its second, third, or fourth positions respectively if said first, third, or at least one of said fifth and sixth differences is zero or negative; and

that one of its second, third, and fourth positions which has priority if at least two of said first, third, fifth, sand sixth differences are zero or negative.

FIG.1

EP 0 485 263 B1

FIG.2

FIG.3

14

18

40 ── λ ── 41

$\dot{\theta}c$

43

42    45    44

+ +
⊗
46

22
$\theta c$

20 ── Cf

FIG.4

$\dot{\theta}c$

$\dot{\theta}c\,max$

$\lambda\,min$

(X)

$\lambda\,max$    $\lambda$

$\dot{\theta}c\,min$

FIG.5

14

18

40 ── λ ── 41

$\dot{\theta}c$

42    45

44    + +
⊗
46

48    49
+ +
⊗

22
$\theta c$

50

47

20 ── Cf

27

FIG.6

FIG.7

# FIG.8

EP 0 485 263 B1

FIG.9

EP 0 485 263 B1